# EUROPÄISCHE PATENTSCHRIFT

(11) **EP 2 952 297 B1**
(45) Veröffentlichungstag und Bekanntmachung des Hinweises auf die Patenterteilung: **11.01.2023**
(21) Anmeldenummer: 15159025.4
(22) Anmeldetag: 13.03.2015
(51) Int. Cl.: B25J 9/00, B25J 9/08, B25J 21/00, B65G 47/14, B25J 19/02

(54) **ZUFÜHRMODUL UND VORRICHTUNG MIT EINEM SOLCHEN ZUM AUTOMATISIERTEN ENTNEHMEN VON IN EINEM BEHÄLTER ANGEORDNETEN WERKSTÜCKEN**
SUPPLY MODULE AND DEVICE WITH SUCH A MODULE FOR THE AUTOMATED REMOVAL OF WORKPIECES ARRANGED IN A CONTAINER
MODULE D'APPORT ET DISPOSITIF AVEC UN TEL MODULE POUR LE PRÉLÈVEMENT AUTOMATISÉ DE PIÈCES AGENCÉES DANS UN RÉCIPIENT

(30) Priorität: 02.06.2014 DE 102014008108
(43) Veröffentlichungstag der Anmeldung: 09.12.2015
(73) Patentinhaber: Liebherr-Verzahntechnik GmbH, 87437 Kempten (DE)
(72) Erfinder: Mattern, Thomas, 87669 Rieden (DE); Hänschke, David, 87452 Altusried (DE); Riedmiller, Bernhard, 87497 Wertach (DE)
(74) Vertreter: Behr, Wolfgang

(56) Entgegenhaltungen:
- EP-A1- 2 679 352
- DE-A1- 10 356 536
- DE-A1- 19 519 524
- DE-U1-202010 015 780
- US-A1- 2013 086 801

## Beschreibung

Die vorliegende Erfindung betrifft eine Vorrichtung zum automatisierten Entnehmen von in einem Behälter angeordneten Werkstücken, mit einer Objekterkennungseinrichtung zum Erfassen der Werkstücke und einem Greifer zum Greifen und Entnehmen der Werkstücke aus dem Behälter, und mit einer Steuerung zur Auswertung der Daten der Objekterkennungseinrichtung, zur Pfadplanung und zur Ansteuerung des Greifers.

Die vorliegende Erfindung betrifft weiterhin ein Zuführmodul für eine solche Vorrichtung.

Eine solche Vorrichtung ist beispielsweise aus der EP 2 679 352 A1 bekannt, welche vollumfänglich zum Gegenstand der vorliegenden Anmeldung gemacht wird.

Solche Vorrichtungen zum automatisierten Entnehmen von in einem Behälter angeordneten Werkstücken werden bisher jeweils für den konkreten Anwendungsfall einzeln geplant, hergestellt und montiert. Hierdurch kann den jeweils sehr speziellen Gegebenheiten Rechnung getragen werden. Allerdings ist dies mit hohen Kosten und einem großen Zeitaufwand verbunden.

Weitere Vorrichtungen zur automatisierten Handhabe von Werkstücken sind aus der DE 20 2010 015 780 U1, DE 195 19 524 A1, US 2013/0086801 A1, DE 103 56 536 A1 und der EP 2 578 365 A2 bekannt.

Aufgabe der vorliegenden Erfindung ist es daher, eine Vorrichtung zum automatisierten Entnehmen von in einem Behälter angeordneten Werkstücken zur Verfügung zu stellen, welche einfacher und kostengünstiger konstruierbar, herstellbar und / oder montierbar ist.

Diese Aufgabe wird erfindungsgemäß durch eine Vorrichtung gemäß Anspruch 1 gelöst.

Die vorliegende Erfindung zeigt dabei eine Vorrichtung zum automatisierten Entnehmen von in einem Behälter angeordneten Werkstücken, mit einer Objekterkenungseinrichtung zum Erfassen der Werkstücke und einem Greifer zum Greifen und Entnehmen der Werkstücke aus dem Behälter. Die Vorrichtung weist dabei weiterhin eine Steuerung zur Auswertung der Daten der Objekterkennungseinrichtung, zur Pfadplanung und zur Ansteuerung des Greifers auf. Erfindungsgemäß ist vorgesehen, dass die Vorrichtung modular aus einem Handhabungsmodul und einem Zuführmodul aufgebaut ist. Das Handhabungsmodul umfasst dabei die Greiferkinematik, während das Zuführmodul eine Anordnung zur Bereitstellung eines Behälters mit Werkstücken aufweist. Durch die erfindungsgemäße modulare Bauweise wird sowohl die Konstruktion, als auch die Herstellung und Montage von Vorrichtungen zum automatisierten Entnehmen von in einem Behälter angeordneten Werkstücken erheblich vereinfacht. Insbesondere können die einzelnen Module dabei separat geplant, konstruiert und vormontiert werden. Weiterhin kann beispielsweise das gleiche Handhabungsmodul mit jeweils unterschiedlichen Zuführmodulen ausgestattet werden, je nachdem, welche konkrete Funktion gewünscht ist. Durch die Modulbauweise können Vorrichtungen zum automatisierten Entnehmen von in einem Behälter angeordneten Werkstücken quasi in Serie hergestellt werden. Dabei ist vorgesehen, dass die Anordnung zur Bereitstellung eines Behälters mit Werkstücken des Zuführmoduls von außen zugänglich ist, was das Einführen von vollen Behältern in das Zuführmodul und die Entnahme von leeren Behältern aus dem Zuführmodul ermöglicht und dass die Vorrichtung ein Ausgabemodul mit mindestens einer Werkstückablage aufweist, auf welcher die Werkstücke vereinzelt und/oder in einer definierten Position abgelegt werden. Weiterhin ist dabei vorgesehen, dass das Ausgabemodul, das Handhabungsmodul und das Zuführmodul jeweils Zellenwände aufweisen, welche den Arbeitsbereich des jeweiligen Modules vor unbefugtem Zutritt schützen, wobei die Module mechanische Verbindungspunkte zur Verbindung untereinander aufweisen, wobei das Zuführmodul die Objekterkennungseinrichtung aufweist. Bei der Greiferkinematik, mit welcher das Handhabungsmodul ausgerüstet ist, handelt es sich dabei bevorzugt um ein Roboter oder um ein Flächenportal, mit welchem der Greifer bewegt wird. Insbesondere kann es sich dabei um einen Sechs-Achs-Roboter handeln.

Der Arbeitsraum des Greifers des Handhabungsmoduls reicht dabei bevorzugt über die Grundfläche des Handhabungsmoduls hinaus, so dass Werkstücke im Bereich des Zuführmoduls gegriffen werden können.

Bevorzugt handelt es sich bei mindestens einem Handhabungsmodul um ein Robotermodul mit einem Roboter, dessen Arbeitsbereich sich über einen Bereich des Robotermoduls hinaus durch offene Seiten des Robotermoduls in einen angrenzenden Bereich erstreckt.

Insbesondere ist die Vorrichtung dabei so aufgebaut, dass durch die Greifer des Handhabungsmoduls Werkstücke aus einem Behälter, welcher über das Zuführmodul bereitgestellt wird, entnommen und auf der Werkstückablage des Ausgabemoduls abgelegt werden. Das Ablegen kann dabei entweder direkt, oder über Zwischenstationen und / oder weitere Greifer erfolgen. Bevorzugt weist das Ausgabemodul dabei eine Transportstrecke für die Werkstücke auf, mit welcher die vereinzelten und / oder in einer definierten Position abgelegten Werkstücke abtransportiert und weiteren Arbeitsschritten zugeführt werden können.

Weiterhin kann die erfindungsgemäße Vorrichtung ein Bearbeitungs- und / oder Montagemodul aufweisen, wobei das Bearbeitungs- und / oder Montagemodul eine Endablage aufweist, an welcher Werkstücke durch einen Greifer eines Handhabungsmoduls abgelegt werden, und eine Bearbeitungs- und / oder Montageeinheit, welche die Werkstücke bearbeitet und / oder montiert.

Bevorzugt können dabei die bearbeiteten und / oder montierten Werkstücke wieder von einem Greifer eines Handhabungsmoduls gegriffen und auf eine Werkstückablage eines Ausgabemoduls abgelegt werden. Gegebenenfalls kann das Bearbeitungs- und / oder Montagemodul jedoch selbst eine Transportstrecke zum Abtransport der bearbeiteten und / oder montierten Werkstücke aufweisen und damit ein kombiniertes Ausgabe- und Bearbeitungs- und / oder Montagemodul darstellen.

Bevorzugt ist das Bearbeitungs- und / oder Montagemodul dabei mit einem Handhabungsmodul, wie es oben näher dargestellt wurde, verbindbar.

Bevorzugt weist eines oder mehrere der oben beschriebenen erfindungsgemäßen Module einen Zellenrahmen auf. Insbesondere kann das Modul dabei eine Bodenplatte aufweisen.

Insbesondere kann das Handhabungsmodul dabei eine Bodenplatte aufweisen, auf welcher der Greifer und die Greiferkinematik, insbesondere ein Roboter oder ein Flächenportal, angeordnet sind. Weiterhin vorteilhafterweise weist das Handhabungsmodul mindestens zwei Zellenwände auf. Weiterhin vorteilhafterweise weist das Handhabungsmodul mindestens eine offene Seite auf, bevorzugt zwei offene Seiten. Bevorzugt kann das Handhabungsmodul dabei mit mindestens einer offenen Seite mit einem Zuführmodul verbunden werden. Weiterhin bevorzugt kann das Handhabungsmodul über eine weitere offene Seite mit einem Bearbeitungs- und / oder Montagemodul und / oder mit einem Ausgabemodul verbunden werden.

Das Zuführmodul weist bevorzugt eine Bodenplatte und/oder drei Zellenwände auf, während eine Seite offen bleibt, um mit dem Handhabungsmodul verbunden zu werden.

Erfindungsgemäß weisen die Module mechanische Verbindungspunkte zur Verbindung untereinander auf. Insbesondere können die mechanischen Verbindungspunkte dabei an den Zellenrahmen angeordnet sein. Insbesondere wird hierdurch eine mechanische Verbindung der Zellenrahmen des Handhabungsmoduls und eines erfindungsgemäßen Zuführmoduls möglich.

Weiterhin können die einzelnen Module Elektrik-, Pneumatik- und / oder Hydraulikschnittstellen zur Verbindung untereinander aufweisen. Insbesondere ist dabei eine Elektrik-, Pneumatik- und / oder Hydraulikschnittstelle zwischen einem Handhabungsmodul und einem Zuführmodul vorgesehen.

Weiterhin können die einzelnen Module eine Schnittstelle zur Verbindung mit einem Fertigungssteuerungssystem aufweisen, über welche der Betrieb der Module mit dem Betrieb eines weiteren Fertigungssystems koordiniert werden kann.

Weiterhin können Schnittstellen zwischen den einzelnen Modulen vorgesehen sein, welche eine Koordinierung des Betriebs der einzelnen Module erlauben. Insbesondere kann über die Schnittstellen dabei ein Datenaustausch zwischen den Steuerungen der einzelnen Module erfolgen. Alternativ oder zusätzlich können die Schnittstellen die Ansteuerung von Aktoren eines Moduls über eine Steuerung eines anderen Moduls erlauben, und / oder die Auswertung von Daten eines Sensors eines Moduls über die Steuerung eines anderen Moduls.

Besonders bevorzugt kann das Handhabungsmodul dabei eine Elektrik-, Pneumatik- und / oder Hydraulikversorgung aufweisen. Bevorzugt weist das Handhabungsmodul weiterhin eine Elektrik-, Pneumatik- und / oder Hydraulikschnittstelle auf, mit welcher weitere Module und insbesondere ein Zuführmodul an die Elektrik-, Pneumatik- und / oder Hydraulikversorgung des Handhabungsmoduls angeschlossen werden können.

Weiterhin bevorzugt ist die Steuerung zur Auswertung der Daten der Objekterkennungseinrichtung, zur Pfadplanung und zur Ansteuerung des Greifers an dem Handhabungsmodul angeordnet. Bevorzugt weist die Steuerung dabei eine Schnittstelle auf, über welche eine Objekterkennungseinrichtung, welche im Bereich des Zuführmoduls angeordnet ist, angeschlossen werden kann. Besonders bevorzugt kann die Steuerung dabei über die Schnittstelle Sensordaten, welche über einen Sensor der Objekterkennungseinrichtung erzeugt werden, beziehen und auswerten. Weiterhin kann vorgesehen sein, dass die im Bereich des Handhabungsmoduls angeordnete Steuerung Aktoren des Zuführmoduls ansteuert.

Das Handhabungsmodul kann dabei ein Bedienmodul aufweisen, welches bevorzugt von einer Außenseite einer Zellenwand des Handhabungsmoduls aus zugänglich ist. Über das Bedienmodul kann dabei bevorzugt auf die Steuerung zugegriffen werden. Insbesondere kann dabei eine Ein/Ausgabe-Schnittstelle vorgesehen sein, insbesondere ein Display oder Bildschirm und/oder Eingabegeräte wie beispielsweise eine Tastatur. Weiterhin kann das Handhabungsmodul einen Schaltschrank aufweisen, welcher ebenfalls bevorzugt von einer Außenseite einer Zellenwand aus zugänglich ist. Im Schaltschrank ist bevorzugt die Energieversorgung angeordnet.

Die modulare Bauweise der erfindungsgemäßen Vorrichtung erlaubt es insbesondere, das gleiche Handhabungsmodul mit unterschiedlichen Zuführ- und / oder Ausgabemodulen zu verbinden, um die Vorrichtung an die jeweils konkret gewünschte Funktionalität anzupassen.

Das Handhabungsmodul ist dabei bevorzugt mechanisch und/oder elektrisch und/oder pneumatisch und/oder hydraulisch komplett vormontiert. Insbesondere ist dabei die Greiferkinematik bereits komplett mit der Steuerung und/oder der Energieversorgung verkabelt. Hierdurch wird die Montagearbeit erheblich reduziert. bevorzugt muss das Handhabungsmodul dabei nur noch abgestellt und mit der Netzspannung verbunden werden.

Weiterhin ist bevorzugt auch das Zuführmodul mechanisch und/oder elektrisch und/oder pneumatisch und/oder hydraulisch komplett vormontiert. so dass es am Aufstellort nur noch mit dem Handhabungsmodul verbunden werden braucht.

Vorteilhafterweise sind Handhabungsmodul und/oder Zuführmodul dabei hängend oder durch einen Gabelstapler als komplette Baueinheiten transportierbar.

Mögliche Ausgestaltungen einer erfindungsgemäßen Vorrichtung, welche durch unterschiedliche Zuführ- und / oder Ausgabemodule bereitgestellt werden, sollen im Folgenden dargestellt werden:
Erfindungsgemäß ist die Anordnung zur Bereitstellung eines Behälters mit Werkstücken des Zuführmoduls von außen zugänglich. Insbesondere erlaubt diese Zugänglichkeit das Einführen von vollen Behältern in das Zuführmodul und / oder die Entnahme von leeren Behältern aus dem Zuführmodul.

Insbesondere erlaubt die Zugänglichkeit dabei das Zuführen und Entnehmen von Behältern über ein Transportfahrzeug wie beispielsweise einen Gabelstapler. Insbesondere kann die Anordnung zur Bereitstellung eines Behälters dabei über eine Türe von außen zugänglich sein, welche in einer Zellenwand eines Zellenrahmens des Zuführmoduls angeordnet ist.

Weiterhin kann vorgesehen sein, dass die Anordnung zur Bereitstellung eines Behälters mit Werkstücken mindestens zwei Behälter aufnehmen kann. Dies erlaubt es, nach der Entleerung eines ersten Behälters sofort mit dem zweiten Behälter weiter zu arbeiten. Vorteilhafterweise befinden sich hierzu beide Behälter im Arbeitsraum des Greifers des Handhabungsmoduls.

Erfindungsgemäß kann das Zuführmodul eine Trennvorrichtung aufweisen, über welche ein Zuführbereich für einen oder mehrere Behälter von einem Arbeitsbereich trennbar ist, insbesondere vom Arbeitsbereich des Greifers. Dies erlaubt es, einen leeren Behälter zu entnehmen bzw. einen vollen Behälter zuzuführen, während ein zweiter Behälter entleert wird. Insbesondere kann als Trennvorrichtung eine Haube vorgesehen sein, welche im Zuführmodul so angeordnet ist, dass durch diese wahlweise der Zuführbereich für den einen oder den anderen Behälter abgedeckt werden kann. Die Haube trennt hierdurch den Arbeitsbereich des Greifers von dem jeweiligen Zuführbereich, während sie den anderen Behälter für den Greifer freigibt. Die Haube ist dabei bevorzugt beweglich am Zuführmodul angeordnet, insbesondere verschiebbar und/oder verschwenkbar. Insbesondere kann es sich bei der Haube um eine verschiebbare Haube, eine verschwenkbare Klappe oder ein Rollo handeln.

In einer weiteren Ausführungsform der vorliegenden Erfindung kann das Zuführmodul mit einem fahrerlosen Transportsystem zusammenwirken.

In einer weiteren Ausführungsform der vorliegenden Erfindung kann die Anordnung zur Bereitstellung eines Behälters mit Werkstücken des Zuführmoduls über eine automatische Behälterzu- und / oder abführstrecke mit Behältern versorgt werden. Insbesondere kann dabei vorgesehen sein, dass die Anordnung zur Bereitstellung eines Behälters mit Werkstücken mindestens zwei Behälter aufnehmen kann. Dabei kann jedoch vorgesehen sein, dass die Entnahme von Werkstücken nur aus einem einzigen Behälter bzw. nur in einer einzigen Behälterposition möglich ist.

Bevorzugt weist das Zuführmodul eine Transportanordnung zum Transport der Behälter im Inneren des Zuführmoduls auf. Die Transportanordnung kann dabei bevorzugt mit der automatischen Behälterzu- und / oder abführstrecke zusammenwirken.

Weiterhin ist denkbar, dass die Transportanordnung innerhalb des Zuführmoduls und die Behälterzu- und / oder abführstrecke in einer Transportstrecke kombiniert sind.

Erfindungsgemäß kann eine Lichtschranke vorgesehen sein, welche den Zuführbereich absichert. Bevorzugt ist diese im Übergangsbereich zwischen Zuführstation und automatischer Behälterzu- und / oder abführstrecke angeordnet.

In einer ersten Variante kann die Anordnung zur Bereitstellung eines Behälters mit Werkstücken des Zuführmoduls dabei ein Quershuttle aufweisen, welches mit einer Behälterzuführstrecke und einer Behälterabführstrecke mit jeweils gegenläufigen Transportrichtungen zusammenwirkt. Insbesondere kann die Behälter Zuführstrecke dabei volle Behälter in den Bereich des Quershuttles zuführen. Im Bereich des Quershuttles werden die Behälter entleert. Die leeren Behälter werden dann wieder der Behälter Abführstrecke übergeben. Die Entnahme der Werkstücke aus den Behältern erfolgt dabei im Bereich des Quershuttles, wobei die Querbewegung der Behälter vor, während und / oder nach dem Entnehmen der Werkstücke erfolgen kann. Bevorzugt trennt die Lichtschranke dabei die Zu- und / oder Abführbereich des Quershuttles von der Behälterzuführstrecke und/oder der Behälterabführstrecke.

In einer alternativen Ausführungsform kann die Anordnung zur Bereitstellung eines Behälters mit Werkstücken des Zuführmoduls einen Drehtisch aufweisen, auf welchem die Behälter anordenbar sind, wobei die Behälter durch Drehen des Drehtisches von einem Zuführbereich des Zuführmoduls in einen Arbeitsbereich des Greifers des Handhabungsmoduls verfahrbar sind und umgekehrt. Der Drehtisch kann dabei entweder bspw. über ein Transportfahrzeug wie einen Gabelstapler mit Behältern beladen werden bzw. können Behälter so entnommen werden. Alternativ kann auch der Drehtisch mit einer automatischen Behälter Zu- und / oder Abführstrecke zusammenwirken. Der Drehtisch weist dabei bevorzugt Trennwände auf, welche den Zuführbereich vom Arbeitsbereich trennen.

In einer weiteren alternativen Ausführungsform kann eine Transportstrecke für Behälter durch das Zuführmodul hindurchführen. Insbesondere kann es sich um ein Transportband handeln, auf welchem die Behälter befüllt in den Bereich des Zuführmoduls gefahren werden, und auf welchem sie nach der Entleerung im Bereich des Zuführmoduls auch wieder aus dem Zuführmodul abgeführt werden.

In einer möglichen Ausführungsform der vorliegenden Erfindung kann das Zuführmodul neben der Bereitstellung der Behälter auch den Abtransport der Werkstücke übernehmen. In diesem Fall bildet das Zuführmodul eine Kombination aus einem Zuführ- und einem Ausgabemodul. Bevorzugt ist dabei nur eine Transportstrecke vorgesehen, auf welcher sowohl die Behälter zu- und abtransportiert werden und die vereinzelten und / oder positionierten Werkstücke abtransportiert werden. Insbesondere können dabei auf der Transportstrecke die Behälter mit ungeordneten Werkstücken sowie Palletierkörbe zur Aufnahme der vereinzelten und / oder positionierten Werkstücke transportiert werden. Insbesondere können die Palletierkörbe dabei Nester zur Aufnahme der Werkstücke aufweisen.

In weiteren möglichen Ausführungsformen der vorliegenden Erfindung kann die Vorrichtung eine Zwischenstation aufweisen, wobei die Steuerung so ausgestaltet sein kann, dass der Greifer die Werkstücke nach dem Entnehmen aus dem Behälter auf der Zwischenstation ablegt, wobei die Steuerung so ausgestaltet sein kann, dass die Werkstücke von einem Greifer von der Zwischenstation aufgenommen und in einer Endablage abgelegt werden. Bei dem Greifer, welcher die Werkstücke von der Zwischenstation abnimmt, kann es sich dabei um den gleichen Greifer handeln, welcher auch die Entnahme aus dem Behälter vornimmt, oder um einen anderen Greifer.

In einer möglichen Ausführungsform kann die Zwischenstation dabei in das Handhabungsmodul integriert sein. Alternativ kann die Zwischenstation in einem Zwischenmodul angeordnet sein. Insbesondere kann ein solches Zwischenmodul dabei einen Zellenrahmen aufweisen, an welchem die Zwischenstation angeordnet ist. Insbesondere weist der Zellenrahmen dabei eine Bodenplatte und mindestens eine, bevorzugt mindestens zwei Zellenwände auf.

Die erfindungsgemäße Vorrichtung kann zwei Handhabungsmodule aufweisen, welche bevorzugt zusammenwirken, um Werkstücke aus einem Behälter zu entnehmen und auf einer Endablage abzulegen. Bevorzugt ist dabei eine Zwischenstation vorgesehen, wobei die Steuerung so ausgestaltet sein kann, dass der Greifer des ersten Handhabungsmoduls die Werkstücke nach dem Entnehmen aus dem Behälter auf der Zwischenstation ablegt, wobei die Steuerung so ausgestaltet sein kann, dass die Werkstücke von einem Greifer des zweiten Handhabungsmoduls von der Zwischenstation aufgenommen und in einer Werkstückablage abgelegt werden. Bevorzugt ist die Zwischenstation dabei in einem Zwischenmodul angeordnet, welches zwischen den beiden Handhabungsmodulen angeordnet ist.

In einer weiteren Ausführungsform der vorliegenden Erfindung kann das Ausgabemodul eine Palletierzelle umfassen und / oder mit einer Palletierzelle zusammenwirken. Insbesondere können die Werkstücke dabei durch ein erfindungsgemäßes Handhabungsmodul in Palletierkörben einer solchen Palletierzelle abgelegt werden. Vorteilhafterweise weist das Ausgabemodul dabei eine Transportstrecke und/oder ein Übergabemodul auf, über welche die Palletierkörbe zu einer Palltierzelle transportiert werden können.

Weiterhin kann in einer weiteren Ausführungsform das Ausgabemodul mit einem Palettenhandlingsystem zusammenwirken, wobei in einer besonders bevorzugten Ausführungsform das Ausgabemodul dem Rüst- und/oder Zuführmodul des Palettenhandlingsystem entspricht.

Erfindungsgemäß können mehrere Handhabungsmodule parallel mit anderen Modulen verbunden werden. Insbesondere können dabei mehrere Handhabungsmodule mit einem Ausgabemodul, und insbesondere einer Transportstrecke für den Abtransport der vereinzelten Werkstücke, zusammenwirken. Bevorzugt weisen die Handhabungsmodule in einer solchen Anordnung jeweils separate Zuführmodule auf. Alternativ ist es jedoch auch denkbar, mehrere Handhabungsmodule mit einem einzigen Zuführmodul zu kombinieren, insbesondere einem Transportband für Behälter mit Werkstücken, sodass die Handhabungsmodule parallel Werkstücke aus jeweils unterschiedlichen Behältern, welche jedoch auf der gleichen Transportstrecke angeordnet sind, entnehmen können.

Weiterhin kann das Handhabungsmodul eine Schnittstelle aufweisen, über welche der Betrieb des Handhabungsmoduls mit dem Betrieb mindestens eines weiteren Moduls koordinierbar ist. Die Schnittstelle kann dabei in einer ersten Ausführungsform einen Datenaustausch einer Steuerung des weiteren Moduls ermöglichen. Alternativ oder zusätzlich kann vorgesehen sein, dass über die Schnittstelle eine Ansteuerung von Aktoren eines weiteren Moduls möglich ist, und / oder die Verwertung von Sensordaten von Sensoren, welche in einem weiteren Modul angeordnet sind.

Weiterhin kann das Handhabungsmodul eine Schnittstelle zu einem Fertigungssteuerungssystem aufweisen, über welche der Betrieb des Handhabungsmoduls mit dem Betrieb eines Fertigungssystems koordiniert werden kann.

Die vorliegende Erfindung umfasst weiterhin ein Zuführmodul für eine Vorrichtung, wie sie oben beschrieben wurde. Das Zuführmodul umfasst dabei eine Anordnung zur Bereitstellung eines Behälters mit Werkstücken. Erfindungsgemäß weist das Zuführmodul weiterhin eine Objekterkennungseinrichtung zum Erfassen der Werkstücke im Behälter auf. Dabei ist vorgesehen, dass das Zuführmodul Zellenwände, welche den Arbeitsbereich des Modules vor unbefugtem Zutritt schützen, und mechanische Verbindungspunkte zur Verbindung mit dem Handhabungsmodul aufweist. Weiterhin ist vorgesehen, dass die Anordnung zur Bereitstellung eines Behälters mit Werkstücken des Zuführmoduls von außen zugänglich ist, was das Einführen von vollen Behältern in das Zuführmodul und die Entnahme von leeren Behältern aus dem Zuführmodul ermöglicht.

Weiterhin kann eine Schnittstelle zu einem Handhabungsmodul vorgesehen sein, über welche die Daten der Objekterfassungseinrichtung an eine Steuerung des Greifers übertragbar sind. Alternativ oder zusätzlich kann die Schnittstelle dazu eingesetzt werden, um die Arbeit der Anordnung zur Bereitstellung eines Behälters mit Werkstücken mit der Bewegung des Greifers zu koordinieren.

Bevorzugt ist das Zuführmodul so mit einem Handhabungsmoduls kombinierbar, dass ein Arbeitsraum des Greifers des Handhabungsmoduls dabei über eine Grundfläche des Handhabungsmoduls hinaus reicht, so dass Werkstücke im Bereich des Zuführmoduls gegriffen werden.

Bevorzugt ist das Zuführmodul so mit einem Robotermodul kombinierbar ist, dass sich ein Arbeitsbereich eines Roboters des Robotermoduls über einen Bereich des Robotermoduls hinaus durch offene Seiten des Robotermoduls in einen angrenzenden Bereich des Zuführmoduls erstreckt.

Bevorzugt kann die Anordnung zur Bereitstellung eines Behälters mit Werkstücken mindestens zwei Behälter aufnehmen.

Bevorzugt weist das Zuführmodul eine Trennvorrichtung auf, über welche ein Zuführbereich für einen oder mehrere Behälter von einem Arbeitsbereich trennbar ist. Insbesondere kann eine Haube vorgesehen sein, welche so im Zuführmodul angeordnet ist, dass diese wahlweise über den Zuführbereich für den einen oder den anderen Behälter angeordnet werden kann, um diesen abzudecken.

Bevorzugt weist das Zuführmodul eine Schnittstelle für ein Fertigungssteuerungssystem auf, über welche der Betrieb des Zuführmoduls mit dem Betrieb eines Fertigungssystems koordinierbar ist.

Bevorzugt ist das Zuführmodul dabei so ausgeführt, wie dies oben im Hinblick auf die Ausführungsbeispiele der erfindungsgemäßen Vorrichtung näher dargestellt wurde.

Bevorzugt erfolgt die Objekterfassung, die Pfadplanung und die Ansteuerung des Greifers des Handhabungsmoduls dabei so, wie dies bspw. aus der EP 2 679 352 A1 bekannt ist. Die dort vorgesehene Zwischenstation muss jedoch nicht zwingend verwirklicht sein. Insbesondere kann es sich bei der Sensoranordnung dabei um einen 3 D-Laserscanner handeln. Insbesondere erlaubt die Objekterfassungseinrichtung dabei die Erfassung der einzelnen Werkstücke im Behälter. Weiterhin kann dabei ein Werkstück identifiziert werden, welches gegriffen werden soll, sowie eine entsprechende Pfadplanung zur Ansteuerung des Greifers und/oder der Greiferkinematik. Weiterhin bevorzugt ist die Sensoranordnung der Objekterkennungseinrichtung dabei verfahrbar, bevorzugt linear verfahrbar. Bevorzugt kann die Verfahrrichtung parallel zu einer Transportrichtung einer Transportanordnung zum Transport der Behälter innerhalb der Zuführanordnung erfolgen.

Die Steuerung der erfindungsgemäßen Vorrichtung steuert die einzelnen Komponenten der Vorrichtung bevorzugt automatisiert an. Soweit ober beschrieben wurde, dass eine Komponente der erfindungsgemäßen Vorrichtung in einer bestimmten Art und Weise betreibbar ist, so weist die Steuerung bevorzugt Steuerroutinen für eine entsprechende automatisierte Ansteuerung auf.

Die vorliegende Erfindung wird nun anhand von Ausführungsbeispielen sowie Zeichnungen näher beschrieben.

Dabei zeigen:
- Fig. 1:: eine schematische Darstellung der erfindungsgemäßen Modulbauweise einer Vorrichtung zum automatisierten Entnehmen von in einem Behälter angeordneten Werkstücken bzw. Handhabungsanlage,
- Fig. 2a:: eine erste Variante der Modulbauweise, bei welcher zusätzlich ein Montagemodul vorgesehen ist,
- Fig. 2b:: eine zweite Variante, bei welcher das Ausgabemodul aus einem Übergabemodul und einer Palletierzelle besteht,
- Fig. 3:: ein erstes Ausführungsbeispiel einer erfindungsgemäßen Vorrichtung, bei welcher die Behälter über ein Transportfahrzeug in das Zuführmodul verfahren werden können,
- Fig. 4:: ein zweites Ausführungsbeispiel, bei welchem die Behälter über eine automatisierte Zuführstrecke zugeführt und über eine automatisierte Abführstrecke abgeführt werden,
- Fig. 5:: ein drittes Ausführungsbeispiel, bei welchem ein Transportband zur Zu- und Abfuhr der Behälter eingesetzt wird, sowie ein weiteres Transportband zum Abführen der Werkstücke,
- Fig. 6:: ein viertes Ausführungsbeispiel, bei welchem das Zuführmodul einen Drehteller aufweist,
- Fig. 7a:: ein fünftes Ausführungsbeispiel, bei welchen eine Zwischenstation vorgesehen ist,
- Fig. 7b:: ein sechstes Ausführungsbeispiel, bei welchem das Ausgabemodul durch eine Palletierzelle gebildet wird,
- Fig. 8:: ein siebtes Ausführungsbeispiel, bei welchem das Ausgabemodul mit einer Palletierzelle in Verbindung steht,
- Fig. 9:: ein Ausführungsbeispiel einer Vorrichtung zum automatisierten Entnehmen von in einem Behälter angeordneten Werkstücken, bei welcher mehrere Handhabungsmodule parallel Werkstücke auf einem gemeinsamen Ausgabemodul ablegen,
- Fig. 10:: ein weiteres Ausführungsbeispiel, bei welchem zwischen zwei Handhabungsmodulen ein Zwischenmodul mit einer Zwischenstation geschaltet ist,
- Fig. 11:: ein Ausführungsbeispiel eines erfindungsgemäßen Robotermoduls bzw. eines erfindungsgemäßen Handhabungsmoduls,
- Fig. 12a:: eine Detailansicht der in Fig. 11 vorgesehenen mechanischen Verbindungselemente,

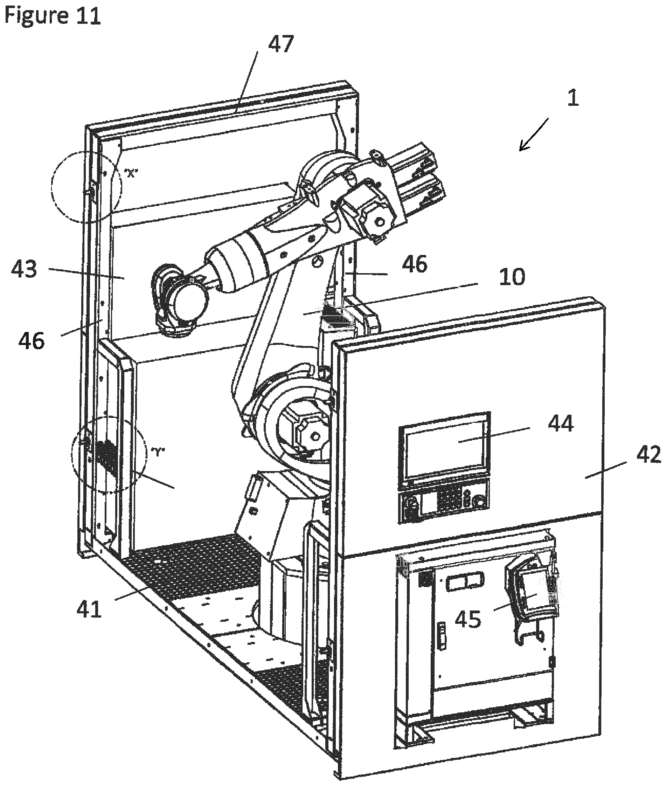

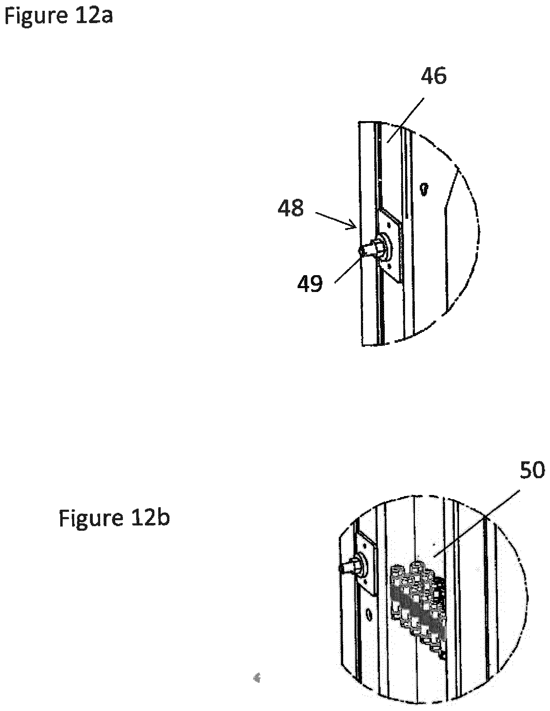

- Fig. 12:: eine Detailansicht der in Fig. 11 vorgesehenen pneumatischen Verbindungselemente,

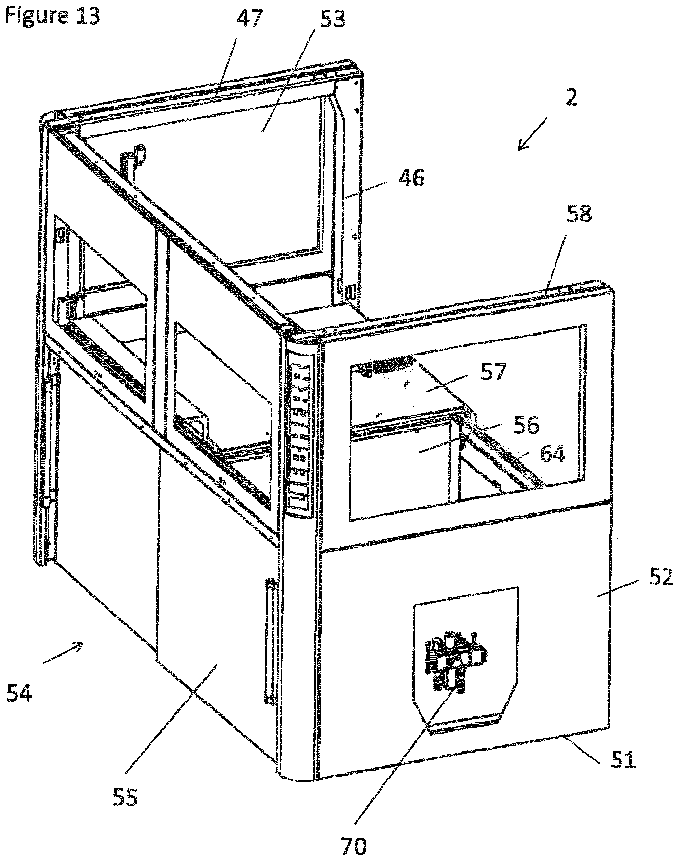

- Fig. 13:: ein Ausführungsbeispiel einer erfindungsgemäßen Zuführstation,

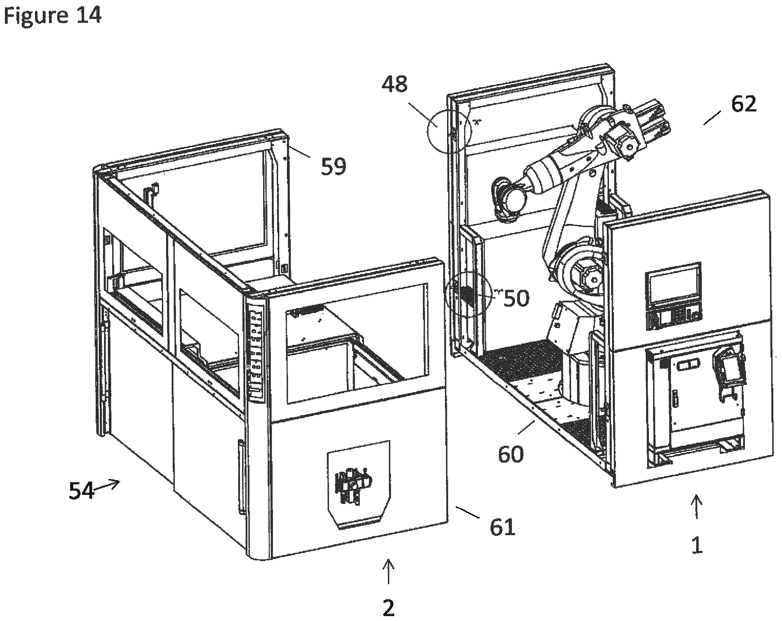

- Fig. 14:: die Kombination aus dem in Fig. 11 gezeigten Ausführungsbeispiel eines erfindungsgemäßen Roboter- und / oder Handhabungsmoduls mit dem in Fig. 13 gezeigten Zuführmodul,

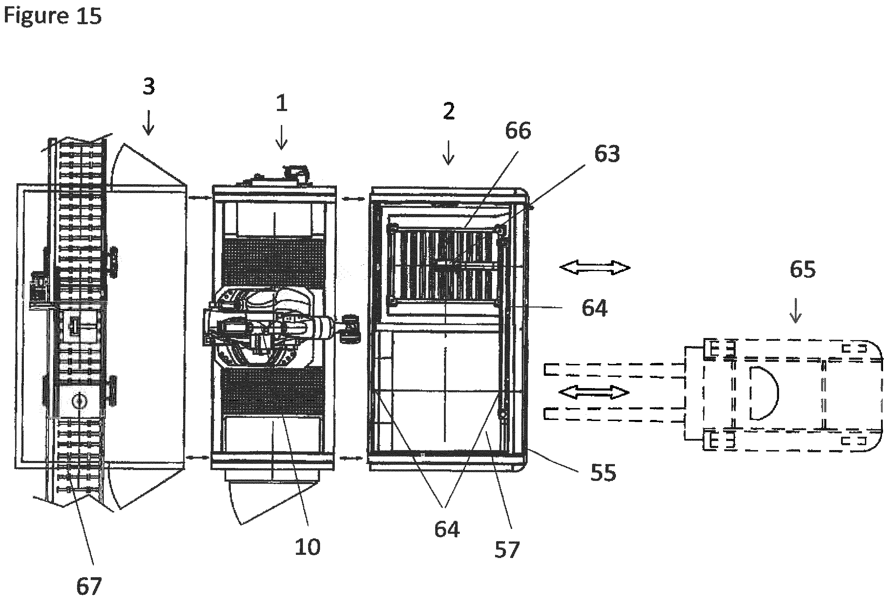

- Fig. 15:: eine Darstellung eines Ausführungsbeispiels einer erfindungsgemäßen Vorrichtung zum automatisierten Entnehmen von in einem Behälter angeordneten Werkstücken bzw. einer erfindungsgemäßen Kombination aus einem Roboter- und / oder Handhabungsmodul, einem Zuführmodul und einem Ausgabemodul, und

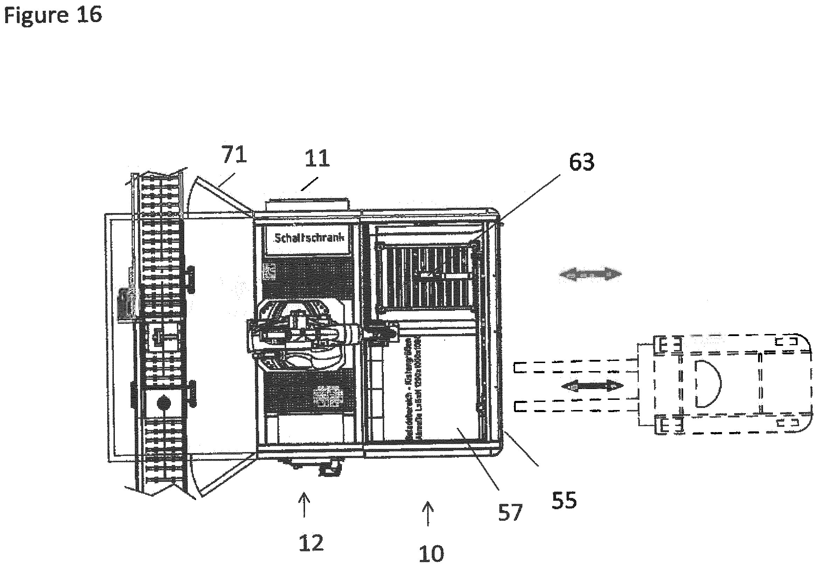

- Fig. 16:: die in Fig. 15 gezeigte Kombination aus Modulen in ihrer zusammengebauten Anordnung.

Die vorliegende Erfindung betrifft in einem ersten Aspekt den modularen Aufbau einer Vorrichtung zum automatisierten Entnehmen von in einem Behälter angeordneten Werkstücken. Solche Vorrichtungen weisen eine Objekterkennungseinrichtung zum Erfassen der im Behälter vorhandenen Werkstücke auf, sowie einen Greifer zum Greifen und Entnehmen der Werkstücke aus dem Behälter, um sie gegebenenfalls über eine oder mehrere Zwischenstationen auf einer Endablage abzulegen. Die Vorrichtung weist weiterhin eine Steuerung zur Auswertung der Daten der Objekterkennungseinrichtung auf, zur Pfadplanung und zur entsprechenden Ansteuerung des Greifers.

Solche Vorrichtungen erlauben es, unsortiertes Schüttgut, welches einer Produktionseinheit oder Fertigungs- und/oder Montagelinie ungeordnet in Behältern zugeführt wird, zu vereinzeln und so der weiteren Produktion zuzuführen.

Solche Vorrichtungen erfordern dabei üblicherweise eine Anpassung an die Bedürfnisse der jeweiligen Produktionseinheit oder Fertigungs- und/oder Montagelinie, um den Anforderungen, welche durch die unterschiedlichen Werkstücke und / oder die Zufuhr und / oder Ausgabe der Werkstücke gestellt werden, gerecht zu werden. Dabei musste die Umsetzung bisher für jeden Kunden neu konstruiert werden.

Die vorliegende Erfindung stellt dagegen einen Modulaufbau für eine solche Vorrichtung zur Verfügung, welche ohne oder zumindest unter Verringerung von aufwändigen Individualkonstruktionen eine Vorrichtung zum automatisierten Entnehmen von in einem Behälter angeordneten Werkstücken zu Verfügung stellt, welche ggf. in bestehende Bearbeitungs- und / oder Fertigungseinheiten integriert werden kann.

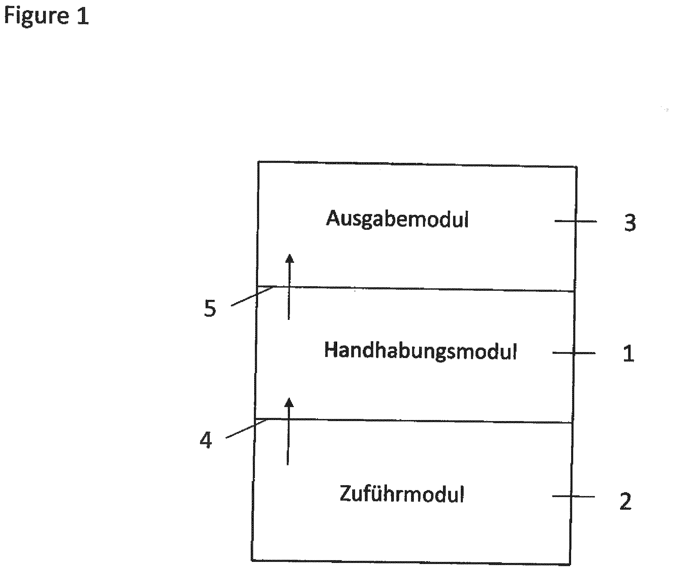

Die erfindungsgemäße Modulbauweise ist in Fig. 1 schematisch dargestellt und teilt eine Vorrichtung zum automatisierten Entnehmen von in einem Behälter angeordneten Werkstücken in ein zentrales Handhabungsmodul 1 auf, auf welchem die Greiferkinematik angeordnet ist, bei der es sich insbesondere um einen Roboter oder ein Flächenportal zur Bewegung des Greifers handelt. Das Handhabungsmodul 1 wird mit einem Zuführmodul 2 kombiniert, welches eine Anordnung zur Bereitstellung der Behälter mit den Werkstücken aufweist. Weiterhin wird die Anordnung aus Handhabungsmodul 1 und Zuführmodul 2 üblicherweise mit einem Ausgabemodul 3 kombiniert, auf welchem der Greifer des Handhabungsmoduls 1 die Werkstücke vereinzelt ablegt. Das Ausgabemodul 3 weist dabei üblicherweise eine Transportstrecke zum Abtransport der Werkstücke auf.

Zwischen dem Handhabungsmodul 1, dem Zuführmodul 2 und dem Ausgabemodul 3 sind jeweils Schnittstellen 4 bzw. 5 vorgesehen, über welche die einzelnen Module miteinander verbunden werden. Dabei kann es sich um eine mechanische Schnittstelle handeln. Weiterhin kann auch eine Elektrik-, Pneumatik- und / oder Hydraulikschnittstelle vorgesehen sein. Zudem kann die Schnittstelle eine Koordination des Betriebs zwischen den einzelnen Modulen erlauben. Zusätzlich kann eine Schnittstelle zu einem Fertigungssystem vorgesehen sein.

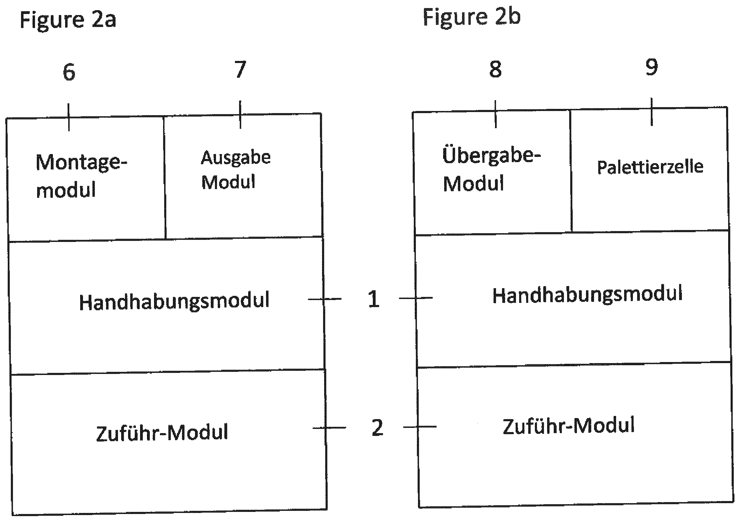

In Fig. 2a und 2b sind dabei zwei Varianten des in Fig. 1 gezeigten grundlegenden Modulaufbaus gezeigt. In Fig. 2a ist zusätzlich zu dem Handhabungsmodul 1, dem Zuführmodul 2 und dem Ausgabemodul 7 ein Montagemodul 6 vorgesehen. An diesem können Werkstücke beispielsweise bearbeitet und / oder Montageschritte an den Werkstücken vorgenommen werden. Dabei können die Werkstücke von dem Handhabungsmodul zunächst an das Montagemodul gegeben werden, und von diesem über das Handhabungsmodul wieder zum Ausgabemodul 7 gegeben werden.

In Fig. 2b ist eine Variante dargestellt, bei welcher das Handhabungsmodul 1 über ein Übergabemodul 8 mit einer Palletierzelle 9 in Verbindung steht. Bei dem Übergabemodul kann es sich beispielsweise um ein Transportband handeln, auf welchem Palletierkörbe zur Palletierzelle transportierbar sind. Die Werkstücke können dann zunächst in die Palletierkörbe im Bereich des Übergabemoduls 8 abgelegt werden. Die Palletierkörbe werden dann in die Palletierzelle 9 transportiert, wofür bevorzugt eine entsprechende Transporteinrichtung vorgesehen ist.

Das Übergabemodul kann entweder an einer Palettierzelle angegliedert sein oder es kann als Übergabemodul in einer Palettierzelle integriert sein und damit eine Direkteingabe in die Palettierzelle ermöglichen.

Als Basiseinheit für sämtliche Varianten der erfindungsgemäßen Vorrichtung dient dabei das Handhabungsmodul, welches mit unterschiedlichen Zuführmodulen kombiniert werden kann. Die Einheit aus Handhabungsmodul und Zuführmodul kann dann durch unterschiedliche Arten eines Ausführmoduls erweitert werden, oder an bestehenden Transport-, Bearbeitungs- und / oder Montageeinheiten angebaut werden.

Der modulare Aufbau ermöglicht es, die vielfältigen und variantenreichen Anforderungen der Kunden im Hinblick auf Fertigungs-, Bearbeitungs- und Montagelinien ohne eine jeweils komplette Neukonstruktion zu bedienen. Weiterhin erlauben die Schnittstellen eine einfache und schnelle Montage vor Ort, da die einzelnen Module vormontiert geliefert und am Montageort nur noch miteinander verbunden werden müssen.

In einer Ausgestaltung der vorliegenden Erfindung weisen insbesondere das Handhabungsmodul 1 und das Zuführmodul 2 jeweils einen Zellenrahmen auf. Dieser umfasst üblicherweise eine Bodenplatte sowie eine oder mehrere Zellenwände, welche bei einer aufgebauten Vorrichtung den unbefugten Zugang zum Arbeitsbereich des Handhabungsgerätes verhindern. Die Zellenrahmen der einzelnen Module werden dabei über mechanische Verbindungspunkte miteinander verbunden. Weiterhin können Elektrik-, Pneumatik- und / oder Hydraulikschnittstellen zur Verbindung der Module vorgesehen sein. Insbesondere können die einzelnen Module dabei komplett aufgebaut geliefert und dann durch wenige Handgriffe miteinander verbunden werden.

Das Handhabungsmodul 1 weist dabei in seiner Grundausstattung die Greiferkinematik auf, d. h. eine Anordnung, über welche der Greifer zum Entnehmen der Werkstücke aus dem Behälter und zum Ablegen auf einer Zwischen- oder Endablage bewegt werden kann. Insbesondere wird hierfür ein Roboter eingesetzt, insbesondere ein Sechsachs-Roboter. Alternativ kann jedoch auch ein Flächenportal eingesetzt werden. Weiterhin weist das Handhabungsmodul eine entsprechende Ansteuerung für die Greiferkinematik und den Greifer auf. Im Ausführungsbeispiel weist das Handhabungsmodul weiterhin ein Bedienmodul mit einer Benutzerschnittstelle auf, über welche auf die Steuerung zugegriffen werden kann. Weiterhin kann eine Elektrik-, Pneumatik- und / oder Hydraulikversorgung vorgesehen sein, insbesondere in einem Schaltschrank. Die Benutzerschnittstelle und der Schaltschrank sind bevorzugt von den Außenseiten der Zellenwände aus zugänglich.

Die erfindungsgemäße Vorrichtung zum Entnehmen von Werkstücken aus den Behältern weist dabei eine Objekterfassungseinrichtung mit einem Sensor auf. Dieser ist jeweils im Bereich des Zuführmoduls angeordnet und kann oberhalb eines zu entleerenden Behälters angeordnet werden, um die Werkstücke im Behälter zu erfassen. Insbesondere handelt es sich dabei um einen 3 D Laserscanner. Die Daten des Sensors werden dabei ausgewertet, um die einzelnen Werkstücke und deren Positionen zu identifizieren und ein zum Greifen geeignetes Werkstück zu ermitteln. Anhand der Positionsdaten dieses Werkstücks erfolgt dann eine Bahnplanung für den Greifer bzw. für dessen Greiferkinematik, insbesondere für den Roboter 10. Der Sensor steht hierfür über eine Schnittstellte mit der Steuerung des Handhabungsmoduls im Verbindung.

Im Folgenden werden nun einige Varianten beschrieben, wie ein erfindungsgemäßes Handhabungsmodul mit unterschiedlichen Zuführmodulen und / oder Ausgabemodulen kombiniert werden kann.

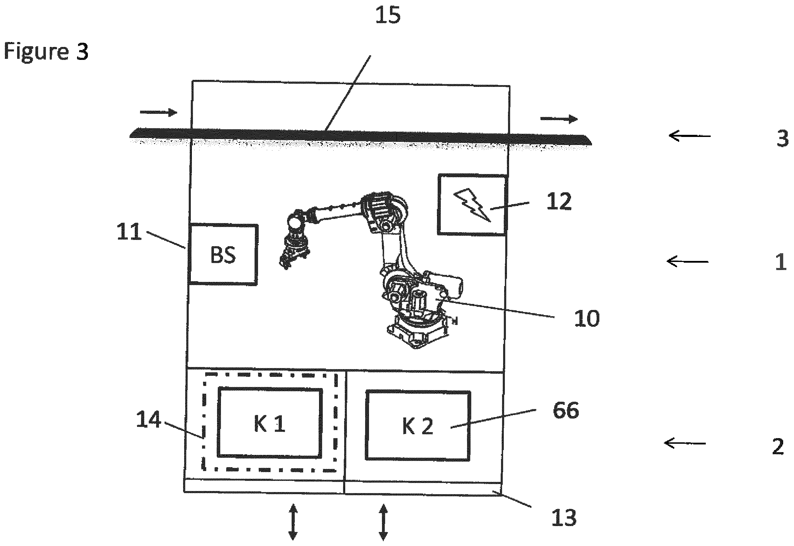

In Fig. 3 ist dabei zunächst das Handhabungsmodul 1 gezeigt, welches einen Roboter 10, die Benutzerschnittstelle 11 und die Energieversorgung 12 aufweist. Das Handhabungsmodul 1 weist dabei zwei offene Seiten auf, über welche es mit einem Zuführmodul 2 und einem Ausgabemodul 3 in Verbindung steht.

Bei dem in Fig. 3 gezeigten Ausführungsbeispiel weist das Zuführmodul 2 zwei nebeneinander angeordnete Zuführbereiche für Behälter auf, welche jeweils über eine Tür 13 von außen zugänglich sind. Die Behälter 66 können dabei beispielsweise über einen Gabelstapler in den jeweiligen Zuführbereich eingeschoben bzw. aus diesem entnommen werden. Um die Zuführbereiche für die Behälter von dem Arbeitsbereich des Greifers zu trennen, ist eine Haube 14 vorgesehen, welche wahlweise über den Zuführbereich für den einen oder den anderen Behälter geschoben werden kann. Ist damit einer der beiden Behälter komplett entleert, fährt die Haube über diesen, und gibt damit den anderen Behälter für den Greifer frei. Der Greifer kann damit nahtlos mit dem Entleeren fortfahren. Durch die Haube 14, welche den Zuführbereich für den nun entleerten Behälter abdeckt, kann dieser nun gefahrlos entnommen und durch einen vollen Behälter ersetzt werden.

Als Ausgabemodul dient in Fig. 3 eine Transportstrecke 15, auf welcher die aus den Behältern entnommenen Werkstücke vereinzelt abgelegt werden. Die Transportstrecke kann dafür gegebenenfalls entsprechende Aufnahmen aufweisen. Im Ausführungsbeispiel handelt es sich um ein Transportband.

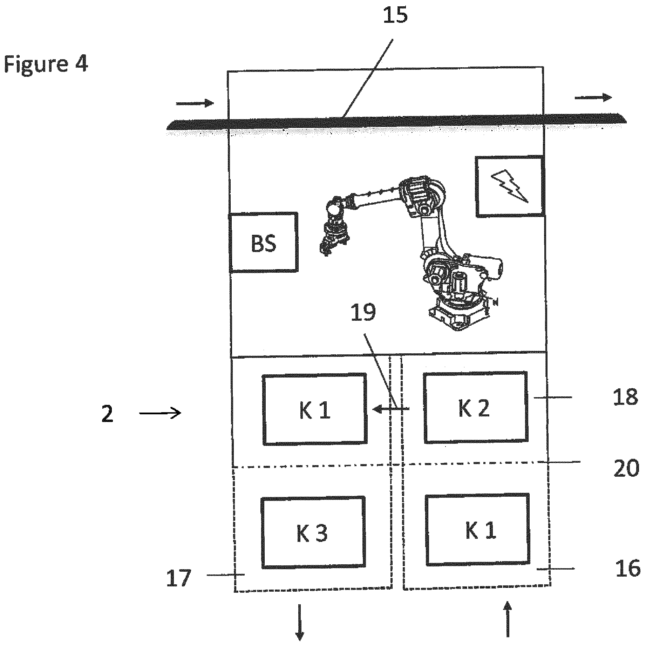

Das in Fig. 4 dargestellte Ausführungsbeispiel unterscheidet sich von dem in Fig. 3 dargestelltem Ausführungsbeispiel durch ein anders gestaltetes Zuführmodul 2. Das Zuführmodul steht dabei mit einer automatisierten Behälterzuführstrecke 16 und einer automatisierten Behälterabführstrecke 17 in Verbindung, über welche volle Behälter zugeführt bzw. leere Behälter abgeführt werden. Die Zuführrichtung der Zuführstrecke 16 ist dabei entgegengesetzt zur Abführrichtung der Abführstrecke 17.

Im Zuführmodul 2 ist daher ein Quershuttle 18 vorgesehen, über welches Behälter in Bewegungsrichtung 19 quer zur Zuführ- bzw. Abführrichtung verfahren werden können. Behälter werden also von der Zuführstrecke 16 in den Zuführbereich des Zuführmoduls transportiert. Dort können die Behälter von dem Handhabungsmodul entleert werden. Ein entleerter Behälter wird dann über das Quershuttle 18 zu einem Übergabebereich zur Übergabe an die Abführstrecke 17 verfahren, von wo aus die entleerten Behälter entnommen werden. Alternativ kann ein befüllter Behälter auch zunächst über das Quershuttle innerhalb der Zuführanordnung transportiert werden, und erst danach das Entnehmen von Werkstücken aus dem Behälter erfolgen. Im Ausführungsbeispiel ist dabei weiterhin eine Lichtschranke 20 vorgesehen, welche zwischen dem Zuführmodul und der Zufuhrstrecke 16 und / oder Abfuhrstrecke 17 angeordnet ist. Die Lichtschranke verhindert dabei den Zugang von Personen in den Bereich des Zuführmoduls.

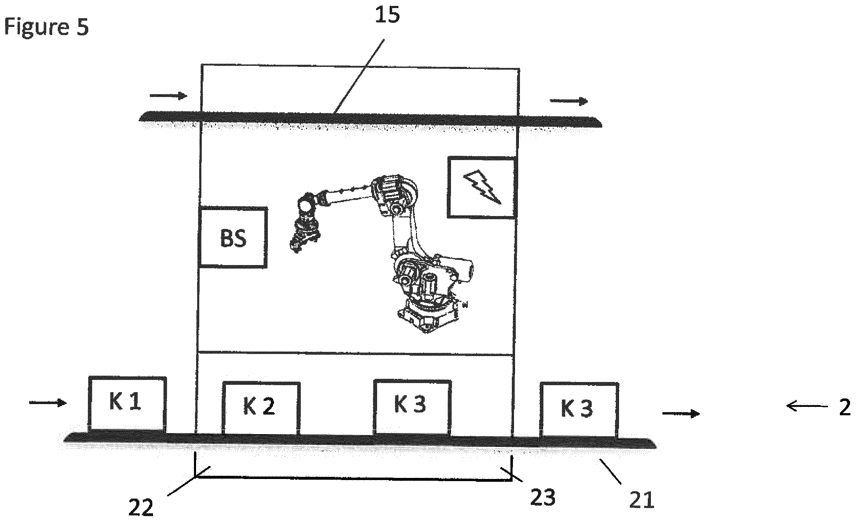

Bei dem in Fig. 5 gezeigten Ausführungsbeispiel ist als Zuführmodul 2 eine Transportstrecke 21 für die Behälter vorgesehen, insbesondere ein Transportband, über welche sowohl die Zufuhr von vollen Behältern, als auch die Abfuhr von entleerten Behältern erfolgt. Insbesondere erfolgt die Zu- und Abfuhr dabei ohne Richtungsänderung einfach durch Weitertransport auf der Transportstrecke. Das Zuführmodul 2 weist dabei bevorzugt auf seinen Schmalseiten 22 und 23 Öffnungen auf, durch welche die Transportstrecke mit den Behältern hindurchgeht.

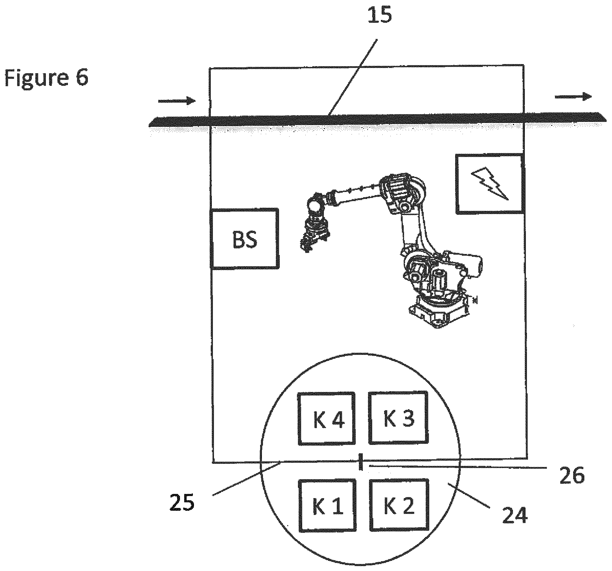

Bei dem in Fig. 6 dargestellten Ausführungsbeispiel weist die Zuführanordnung einen Drehteller 24 auf, auf welchem mehrere Behälter angeordnet werden können. Der Drehteller 24 ist dabei um eine vertikale Drehachse 26 drehbar, um die Behälter von einem Zuführbereich für die Behälter in den Arbeitsbereich des Handhabungsmoduls zu bringen.

Bevorzugt weist der Drehteller 24 dabei eine Trennwand 25 auf, welche den Arbeitsbereich des Greifers von dem Zuführbereich für die Behälter trennt. Das Zuführen und Entnehmen der Behälter zu bzw. von dem Drehteller kann dabei wieder über ein Transportfahrzeug, bspw. einen Gabelstapler, erfolgen. Alternativ kann auch ein solcher Drehteller mit einer automatisierten Zu- und / oder Abführstrecke für die Behälter kombiniert werden.

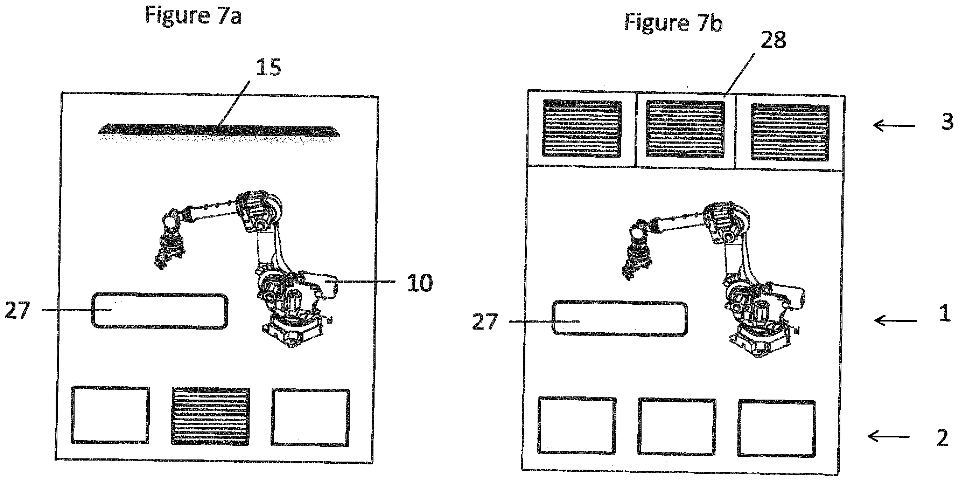

Bei den in Fig. 7a und 7b gezeigten Ausführungsbeispielen ist im Bereich des Handhabungsmoduls 1 weiterhin eine Zwischenstation 27 vorgesehen, auf welcher der Greifer des Handhabungsmoduls Werkstücke, welche aus den Behältern im Bereich des Zuführmoduls entnommen werden, ablegen und gegebenenfalls neu greifen kann. Insbesondere ermöglicht die Zwischenstation dabei einen genaueren Griff und damit eine genauere Ablage im Bereich des Ausgabemoduls. Als Zuführmodul 2 kann dabei ein beliebiges Zuführmodul eingesetzt werden, welches in Fig. 7a und 7b lediglich schematisch dargestellt ist. Weiterhin kann auch ein beliebiges Ausgabemodul eingesetzt werden.

In Fig. 7a wird dabei wieder eine Transportstrecke 15 als Ausgabemodul eingesetzt. In Fig. 7b ist als Ausgabemodul 3 dagegen eine Palletierzelle 28 vorgesehen, in welche die Werkstücke ablegt werden.

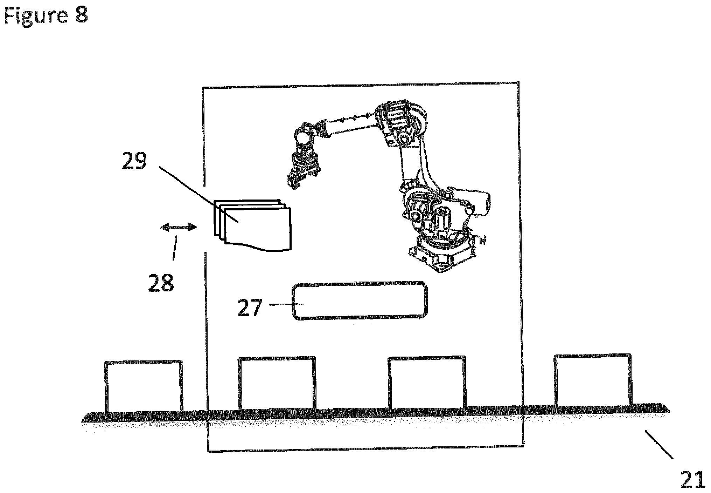

In Fig. 8 ist ein weiteres Ausführungsbeispiel dargestellt, bei welchem die Zu- und Abfuhr der Behälter über ein Transportband 21 erfolgt. Weiterhin ist hier im Bereich des Handhabungsmoduls eine Zwischenablage 27 vorgesehen. Die Ablage erfolgt dabei in Palletierkörbe 29, welche über eine Transportstrecke 28 zu einer Palletierzelle verfahren werden.

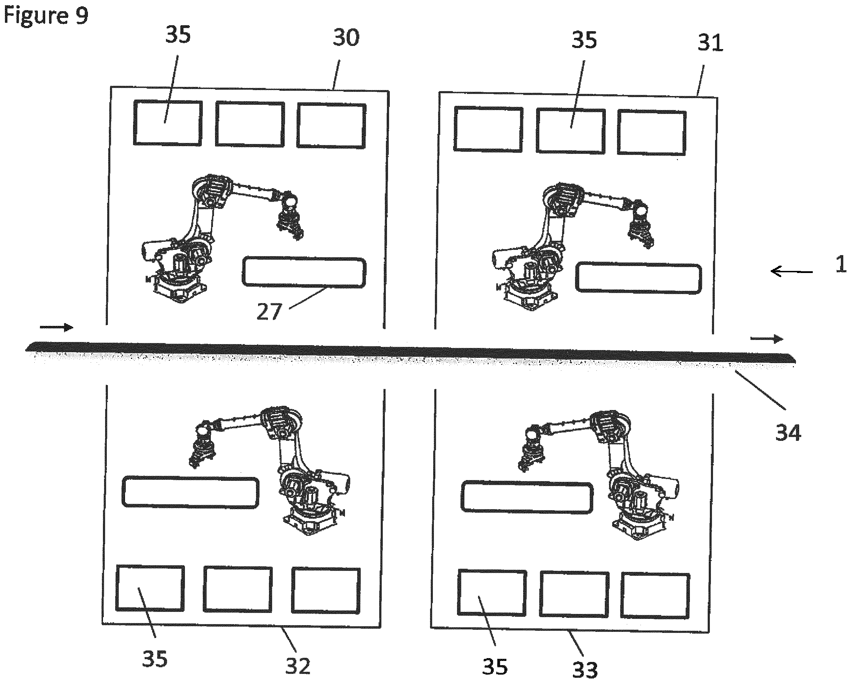

In Fig. 9 ist eine Anordnung gezeigt, bei welcher mehrere Handhabungsmodule 1 mit einem einzigen Ausgabemodul 34, im Ausführungsbeispiel wieder einem Transportband, kombiniert werden. Die Handhabungsmodule arbeiten dabei parallel, und legen jeweils vereinzelte Werkstücke auf dem Ausgabemodul 34 ab. Ausführungsbeispiel sind die einzelnen Handhabungsmodule 1 dabei jeweils mit separaten Zuführmodulen 35 kombiniert und bilden damit Entnahmeeinheiten 30 bis 33. Dabei sind im Ausführungsbeispiel jeweils zwei Entnahmeeinheiten 30 bzw. 32 auf gegenüberliegenden Seiten des Transportbandes 34 vorgesehen, sodass die Beladung von gegenüberliegenden Seiten erfolgt. Weiterhin sind jeweils zwei Entnahmeeinheiten entlang des Transportbandes 34 hintereinander angeordnet.

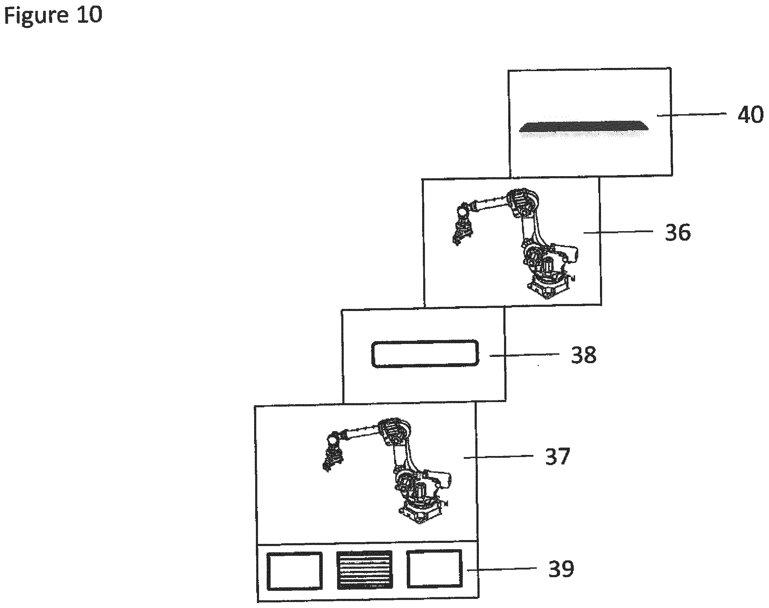

In Fig. 10 ist ein Ausführungsbeispiel gezeigt, bei welchem ebenfalls mehrere Handhabungsmodule eingesetzt werden. Diese werden hierbei jedoch in Serie geschaltet, so dass die Werkstücke jeweils nacheinander von zwei unterschiedlichen Handhabungsmodulen gehandhabt werden. Dies ermöglicht insbesondere eine Erhöhung der Griffgenauigkeit beim Ablegen auf der Endablage. Im Ausführungsbeispiel sind dabei die Handhabungsmodule 36 und 37 vorgesehen, welche über ein Zwischenmodul 38 mit einer Zwischenstation kombiniert werden. Die einzelnen Module können dabei wie in Fig. 10 schematisch dargestellt versetzt miteinander kombiniert werden, bevorzugt jedoch fluchtend. Die Anordnung aus den beiden Handhabungsmodulen 36 und 37 und dem Zwischenmodul 38 wird dann mit einem Zuführmodul 39 und einem Ausgabemodul 40 kombiniert. Das erste Handhabungsmodul 37 entnimmt dabei Werkstücke aus den Behältern im Bereich des Zuführmoduls 39 und legt diese auf der Zwischenstation des Zwischenmoduls 38 ab, von wo aus diese über das zweite Handhabungsmodul 36 wieder gegriffen und im Bereich des Ausgabemoduls 40 abgelegt werden.

In einer weiteren möglichen Ausgestaltung der Erfindung kann das Zuführmodul mit einem fahrerlosen Transportsystem zusammenwirken.

In Fig. 11 ist ein Ausführungsbeispiel eines Robotermoduls gemäß der vorliegenden Erfindung gezeigt, welches beispielsweise als Handhabungsmodul in einer erfindungsgemäßen Vorrichtung zur Entnahme von Werkstücken aus einem Behälter eingesetzt werden kann, wie sie oben dargestellt wurde. Das Robotermodul kann jedoch auch unabhängig von dieser Anwendung in vielfältigen Aufgabenbereichen eingesetzt werden.

Das Robotermodul 1 umfasst einen Zellenrahmen, welcher aus einer Bodenplatte 41 und den Zellenwänden 42 und 43 besteht. Auf der Bodenplatte ist dabei der Roboter 10 montiert. Bei dem Roboter 10 handelt es sich im Ausführungsbeispiel um einen Sechs-Achs-Industrieroboter.

Die Bodenplatte 41 ist dabei rechteckig, wobei die beiden Zellenwände 42 und 43 auf gegenüberliegenden Schmalseiten der Bodenplatte 41 angeordnet sind. Die beiden Längsseiten des Robotermoduls sind dagegen offen. Der Arbeitsbereich des Roboters 10 erstreckt sich über den Bereich des Robotermoduls hinaus durch die offenen Seiten in den angrenzenden Bereich. Hierdurch kann das Robotermodul 1 mit weiteren Modulen kombiniert werden, welche beispielsweise Werkstücke bereitstellen oder aufnehmen, die vom Roboter bearbeitet und / oder gehandhabt werden.

Die Zellenwände sind dabei im Ausführungsbeispiel aus Eckstreben 46 aufgebaut, welche über Querstreben 47 miteinander verbunden sind. Weiterhin weisen die Zellenwände eine Verkleidung auf. Die Zellenwände verhindern dabei den Zutritt zum Arbeitsraum des Roboters 10.

Ein Steuermodul für den Roboter ist in das Robotermodul integriert. Weiterhin weist das Robotermodul eine Benutzerschnittstelle auf, welche im Ausführungsbeispiel an einer Außenwand der Zellenwand 42 angeordnet ist. Die Schnittstelle weist dabei einen Display 44 sowie Eingabeelemente auf. Weiterhin ist ein Touchscreen 45 als ein Ein-/Ausgabeelement vorgesehen. Über die Benutzerschnittstelle kann auf das Steuermodul zugegriffen und insbesondere die Bewegung des Roboters angesteuert werden.

Weiterhin weist das Robotermodul eine Elektrik-, Pneumatik- und / oder Hydraulikversorgung 12 auf, welche über ein im Bereich der anderen Zellenwand 43 angeordneten Schaltschrank von außen zugänglich ist. Insbesondere handelt es sich dabei um eine Energieversorgung nicht nur für den Roboter bzw. das Robotermodul selbst, sondern auch für weitere Module, welche über entsprechende Schnittstellen angeschlossen werden können.

Das erfindungsgemäße Robotermodul kann mit weiteren Modulen verbunden werden, um eine Bearbeitungs-, Montage- und / oder Handhabungseinheit zu bilden. Bevorzugt weisen auch die weiteren Module einen Zellenrahmen auf, welcher mit dem Zellenrahmen des Robotermoduls mechanisch verbunden werden kann.

Der Zellenrahmen des im Ausführungsbeispiel gezeigten Robotermoduls weist dabei mechanische Verbindungspunkte 48 zur Verbindung mit weiteren Modulen auf. Diese sind an den Eckstreben 46 vorgesehen. Im Ausführungsbeispiel handelt es sich dabei um Schraubdome 49, welche durch entsprechende Öffnungen in dem Zellenrahmen eines weiteren Moduls hindurchgeschoben und mit diesem verschraubt werden können.

Weiterhin können weitere Module zur Energieversorgung mit dem Robotermodul verbunden werden. Hierfür ist eine Pneumatik- und / oder Hydraulikschnittstelle 50 vorgesehen, über welche ein weiteres Modul an die Hydraulik- und / oder Pneumatikversorgung des Robotermoduls angeschlossen werden kann.

Weist das Robotermodul dabei eine Hydraulikversorgung auf, so umfasst diese bevorzugt eine Pumpe, welche Hochdruck-Hydraulikfluid bereitstellt. Ist eine Pneumatikversorgung vorgesehen, so umfasst diese bevorzugt einen Kompressor, welcher Druckluft zur Verfügung stellt.

Weiterhin kann auch der elektrische Anschluss eines weiteren Moduls über die elektrische Versorgung des Robotermoduls erfolgen. Bevorzugt ist auch hierfür eine elektrische Schnittstelle vorgesehen.

Weiterhin kann eine Schnittstelle zu dem Steuermodul des Roboters vorgesehen sein, über welche der Betrieb des Robotermoduls mit dem Betrieb anderer Module koordiniert werden kann.

In einem ersten Ausführungsbeispiel kann das weitere Modul dabei selbst eine Steuerung aufweisen, welche über die Schnittstelle mit dem Steuermodul des Robotermoduls 1 kommuniziert, vorzugsweise bidirektional kommuniziert.

In einer alternativen Ausführungsform kann die Ansteuerung von Aktoren eines weiteren Moduls auch über das Steuermodul des Robotermoduls erfolgen. Weiterhin können Sensordaten von Sensoren, welche in einem weiteren Modul angeordnet sind, über das Steuermodul des Robotermoduls ausgewertet werden.

Weiterhin ist auch eine Kombination aus den oben genannten Varianten einer Schnittstelle denkbar.

Das Robotermodul ist so aufgebaut, dass es komplett vormontiert als Baueinheit an den Aufstellort geliefert werden kann. Dabei kann der Zellenrahmen zum Transport gegebenenfalls über eine Längsstrebe, welche die Zellenwände in ihrem oberen Bereich miteinander verbindet, versteift werden. Der Transport des Robotermoduls kann dabei entweder hängend erfolgen, beispielsweise indem mit der Längsstrebe oder den Zellenwänden Haken verbunden werden, oder indem das Robotermodul hängend am Roboter transportiert wird. Alternativ kann das Robotermodul beispielsweise über einen Gabelstapler transportiert werden, welcher unter die Bodenplatte greift.

Das Robotermodul weist dabei bereits eine komplette Verkabelung des Roboters mit dem Steuermodul, der Energieversorgung und der Benutzerschnittstelle auf. Hierdurch sind am Aufstellort nur noch wenige Montageschritte durchzuführen.

Bevorzugt sind auch die weiteren Module entsprechend vormontiert und müssen nur noch mechanisch mit dem Robotermodul verbunden und über die entsprechenden Schnittstellen mit der Energieversorgung und / oder dem Steuermodul des Robotermoduls verbunden werden.

In Fig. 13 ist ein Ausführungsbeispiel eines Zuführmoduls gezeigt, welches mit dem erfindungsgemäßen Robotermodul 1, welches in diesem Fall als Handhabungsmodul arbeitet, verbunden werden kann. Zuführmodul 2 und Robotermodul bzw. Handhabungsmodul 1 bilden dabei bevorzugt eine Vorrichtung zum Entnehmen von in einem Behälter angeordneten Werkstücken, insbesondere zum Entnehmen von ungeordnet in einem Behälter angeordneten Werkstücken.

Das Zuführmodul 2 weist dabei ebenfalls einen Zellenrahmen auf, welcher mit dem Zellenrahmen des Handhabungsmoduls 1 verbindbar ist. Der Zellenrahmen weist dabei eine Bodenplatte 51 sowie Zellenwände 52, 53 und 54 auf. Eine Seite des Zuführmoduls ist dagegen offen, und wird mit einer offenen Seite des Handhabungsmoduls verbunden, sodass der Roboter 10 im Bereich des Zuführmoduls arbeiten kann.

Der Zellenrahmen des Zuführmoduls weist wiederum Eckstreben 56 auf, welche über Querstreben 47 und Längsstreben miteinander in Verbindung stehen. Weiterhin sind auch hier Abdeckungen bzw. Fenster vorgesehen, welche den Bereich des Zuführmoduls von unbefugtem Zutritt schützen.

Die an der offenen Seite des Zellenrahmens angeordneten Eckstreben 46 können dabei mechanisch mit den Eckstreben 46 des Zellenrahmens des Robotermoduls verbunden werden, insbesondere über die in Fig. 12a dargestellten Befestigungspunkte.

Der Anschluss an die Energieversorgung des Robotermoduls erfolgt über die in Fig. 12b gezeigte Schnittstelle 50, welche mit einer entsprechenden Schnittstelle 70 des Zuführmoduls verbunden wird. Die Schnittstelle 70 des Zuführmoduls ist dabei im Inneren des Zuführmoduls angeordnet und über eine Türe in einer Außenwand zugänglich. Weiterhin können Sensoren und / oder Aktoren des Zuführmoduls mit dem Steuermodul des Robotermoduls über eine nicht dargestellte Elektronikschnittstelle verbunden werden.

Das Zuführmodul 2 ist ebenfalls komplett vormontiert und weist eine komplette Verkabelung auf, welche lediglich eine Verbindung mit den Schnittstellen des Robotermoduls notwendig macht. Das Zuführmodul kann dabei beispielsweise über die Bohrungen 48 an einen Haken gehängt werden und hängend transportiert werden. Alternativ ist auch hier ein Transport über einen Gabelstapler denkbar.

In Fig. 14, 15 und 16 ist nun die Kombination aus dem Handhabungsmodul 1 und dem Zuführmodul 2 gezeigt, welche gemeinsam eine Vorrichtung zur Entnahme von Werkstücken aus Behältern 66 bilden. Das Handhabungsmodul 1 ist dabei auf seiner dem Zuführmodul gegenüber liegenden freien Seite weiterhin mit einem Ausgabemodul 3 verbunden, auf welches später noch näher eingegangen wird.

Das Zuführmodul bildet dabei eine Zuführanordnung zur Bereitstellung von Behältern, aus welchen der Roboter Werkstücke entnehmen kann, welche auch unabhängig von dem erfindungsgemäßen modularen Aufbau eingesetzt werden kann. Besonders bevorzugt ist jedoch hier der oben beschriebene modulare Aufbau vorgesehen.

Die durch das Zuführmodul gebildete Zuführanordnung ist dabei auf einer Seite zur Bereitstellung und Entnahme von Behältern zugänglich. Im Ausführungsbeispiel sind hierfür Schiebetüren 55 vorgesehen, welche in der Zellenwand 54 eingelassen sind. Hierdurch sind zwei nebeneinander in der Zuführanordnung vorgesehene Zuführbereiche für jeweils einen Behälter zugänglich. Die Behälter können dabei beispielsweise über einen Gabelstapler 65 in die Zuführanordnung eingestellt oder nach dem Entleeren aus dieser entnommen werden.

Die Bereitstellung von zwei Behältern hat dabei den Vorteil, dass nach dem Entleeren eines ersten Behälters die Vorrichtung sofort mit dem Entleeren des zweiten Behälters fortfahren kann, ohne dass der Entnahmebetrieb unterbrochen werden muss, um den Behälter auszutauschen. Vielmehr kann der leere Behälter entnommen und durch einen vollen Behälter ersetzt werden, während der andere Behälter entleert wird.

Hierfür bedarf es jedoch einer Trennung der Zuführbereiche für die Behälter von dem Arbeitsbereich des Greifers, mit welchem die Werkstücke aus dem Behälter entnommen werden. Hierfür ist eine verschiebbare Haube 57 vorgesehen, welche entweder über den Zuführbereich für den ersten Behälter oder den Zuführbereich für den zweiten Behälter geschoben werden kann, und so diesen vom Arbeitsraum des Greifers trennt.

Bevorzugt sind die Türen 55 dabei so ausgestaltet, dass sie nur dann geöffnet werden können, wenn der der jeweiligen Tür zugeordnete Zuführbereich über die verschiebbare Haube 47 von dem Arbeitsbereich des Greifers abgetrennt ist. Hierdurch wird sichergestellt, dass beim Entnehmen und Einstellen eines Behälters in die Zuführanordnung keine Verletzungsgefahr besteht.

Die erfindungsgemäße Vorrichtung zum Entnehmen von Werkstücken aus den Behältern weist dabei eine Objekterfassungseinrichtung mit einem Sensor 63 auf, welcher oberhalb der jeweiligen Behälter angeordnet werden kann und die Werkstücke im Behälter erfasst. Insbesondere handelt es sich dabei um einen 3 D Laserscanner. Die Daten der Sensoranordnung werden dabei ausgewertet, um die einzelnen Werkstücke und deren Positionen zu identifizieren und ein zum Greifen geeignetes Werkstück zu ermitteln. Anhand der Positionsdaten dieses Werkstücks erfolgt dann eine Bahnplanung für den Greifer bzw. für dessen Greiferkinematik, insbesondere für den Roboter 10.

Die Sensoranordnung 63 ist dabei verfahrbar in der Zuführanordnung angeordnet. Hierfür ist insbesondere eine Verfahranordnung 64 vorgesehen, entlang welcher der Sensor 63 wahlweise über dem ersten und dem zweiten Behälter angeordnet werden kann. Dies hat zum einen den Vorteil, dass nur eine Sensoranordnung zum Erfassen der Werkstücke eingesetzt werden muss, da diese je nach Behälter, welcher entleert werden soll, über den jeweiligen Behälter gefahren werden kann. Zum anderen kann die Sensoranordnung, nachdem die Werkstücke erfasst werden, aus einem Bereich oberhalb des Behälters weggefahren werden, sodass der Arbeitsbereich des Greifers nicht durch die Sensoranordnung eingeschränkt wird. Nachdem ein Werkstück entnommen wurde, wird die Sensoranordnung dann wieder über den Behälter gefahren, um die verbleibenden Werkstücke zu erfassen.

Im Ausführungsbeispiel der vorliegenden Erfindung, bei welcher die gesamte Steuerelektronik für den Griff aus dem Behälter im Bereich des Robotermoduls 1 angeordnet ist, wird die Sensoranordnung 63 mit dem Steuermodul des Robotermoduls verbunden, wobei die Daten des Sensormoduls über das Steuermodul ausgewertet werden.

Das Handhabungsmodul ist, wie in Fig. 15 und 16 gezeigt, auf der dem Zuführmodul gegenüberliegenden offenen Seite mit einem Ausgabemodul verbunden. Im Ausführungsbeispiel weist auch dieses einen Zellenrahmen auf, welcher mit dem Zellenrahmen des Handhabungsmodules 1 verbunden wird. Die Ausgabeeinheit weist dabei eine Transportstrecke auf, auf welcher der Greifer der Handhabungseinheit die aus dem Behälter entnommenen Werkstücke ablegt. Bei der Transportstrecke handelt es sich dabei um ein Rollenband. Auf diesem können gegebenenfalls Nester transportiert werden, in welche die Werkstücke abgelegt werden. Der Zellenrahmen des Ausgabemoduls schützt auch hier vor unautorisiertem Zugang zum Arbeitsbereich des Roboters 10. Für Wartungsarbeiten sind Türen 71 vorgesehen, über welche das Innere der durch Zuführmodul, Handhabungsmodul und Ausgabemodul gebildeten Zelle betreten werden kann.

Durch den modulartigen Aufbau kann die erfindungsgemäße Vorrichtung zur Entnahme von Werkstücken aus einem Behälter mit nur geringem Konstruktions- und Montageaufwand in eine Vielzahl von unterschiedlichen Bereichen eingesetzt werden. Insbesondere kann dabei das erfindungsgemäße Handhabungsmodul mit bereits kundenseitig vorhandenen Ausgabeeinheiten kombiniert werden, sodass lediglich ein entsprechender Anschluss des Handhabungsmoduls insbesondere über Konstruktion eines Zellrahmens für das Ausgabemodul neu konstruiert werden muss.

Weiterhin kann das Handhabungsmodul auch mit kundenseitig gegebenenfalls bereits vorhandenen Zuführmodulen kombiniert werden.

Das erfindungsgemäße Robotermodul kann jedoch auch in anderen Anwendungen zum einfachen und kostengünstigen Aufbau einer Roboterzelle zum Einsatz kommen. Insbesondere kann es dabei mit Bearbeitungs- und / oder Montagemodulen kombiniert werden.

## Patentansprüche

1. Vorrichtung zum automatisierten Entnehmen von in einem Behälter (66) angeordneten Werkstücken, mit einer Objekterkennungseinrichtung (63) zum Erfassen der Werkstücke und mindestens einem Greifer zum Greifen und Entnehmen der Werkstücke aus dem Behälter, und mit einer Steuerung zur Auswertung der Daten der Objekterkennungseinrichtung, zur Pfadplanung und zur Ansteuerung des Greifers,
wobei die Vorrichtung modular aus mindestens einem Handhabungsmodul (1), mindestens einem Zuführmodul (2) sowie einem Ausgabemodul (3) aufgebaut ist, wobei das Handhabungsmodul (1) die Greiferkinematik (10), insbesondere einen Roboter oder ein Flächenportal aufweist, das Zuführmodul eine Anordnung zur Bereitstellung eines Behälters (66) mit Werkstücken und die Objekterkennungseinrichtung (63) aufweist
und das Ausgabemodul (3) mindestens eine Werkstückablage (15) aufweist, auf welcher die Werkstücke vereinzelt und/oder in einer definierten Position abgelegt werden,
wobei die Anordnung zur Bereitstellung eines Behälters (66) mit Werkstücken des Zuführmoduls (2) von außen zugänglich ist, was das Einführen von vollen Behältern (66) in das Zuführmodul und die Entnahme von leeren Behältern aus dem Zuführmodul ermöglicht und
wobei das Ausgabemodul (3), das Handhabungsmodul (1) und das Zuführmodul (2) jeweils Zellenwände (42, 43, 52 -54) aufweisen, welche den Arbeitsbereich des jeweiligen Modules vor unbefugtem Zutritt schützen, wobei die Module mechanische Verbindungspunkte (48) zur Verbindung untereinander aufweisen.

2. Vorrichtung nach Anspruch 1, wobei das Ausgabemodul eine Transportstrecke (15) für die Werkstücke aufweist, und/oder
wobei ein Arbeitsraum des Greifers des Handhabungsmoduls (1) über eine Grundfläche des Handhabungsmoduls (1) hinaus reicht, so dass Werkstücke im Bereich des Zuführmoduls gegriffen werden, und/oder
wobei es sich bei mindestens einem Handhabungsmodul (1) um ein Robotermodul (1) mit einem Roboter (10) handelt, dessen Arbeitsbereich sich über einen Bereich des Robotermoduls (10) hinaus durch mindestens eine offene Seite des Robotermoduls (10) in einen angrenzenden Bereich erstreckt.

3. Vorrichtung nach einem der vorangegangenen Ansprüche, mit einem Bearbeitungs- und/oder Montagemodul, wobei das Bearbeitungs- und/oder Montagemodul eine Werkstückablage aufweist, an welcher Werkstücke durch einen Greifer eines Handhabungsmoduls (1) abgelegt werden, und eine Bearbeitungs- und/oder Montageeinheit, welche die Werkstücke bearbeitet und/oder montiert, wobei die bearbeiteten und/oder montierten Werkstücke bevorzugt von einem Greifer eines Handhabungsmoduls gegriffen und auf die Werkstückablage des Ausgabemoduls (3) abgelegt werden.

4. Vorrichtung nach einem der vorangegangenen Ansprüche, wobei eines oder mehrere der Module Zellenrahmen (46) und/oder eine Bodenplatte (41) aufweisen und/oder wobei die mechanischen Verbindungspunkte (48) an den Zellenrahmen (46) angeordnet sind.

5. Vorrichtung nach einem der vorangegangenen Ansprüche, wobei die einzelnen Module Elektrik-, Pneumatik- und/oder Hydraulikschnittstellen (50) zur Verbindung untereinander aufweisen, und/oder wobei Schnittstellen vorgesehen sind, welche eine Koordinierung des Betriebs der einzelnen Module erlauben und/oder wobei eine Schnittstelle zu einem Fertigungssteuerungssystem vorgesehen ist, welche eine Koordinierung der Module mit einem weiteren Fertigungssystem erlaubt.

6. Vorrichtung nach einem der vorangegangenen Ansprüche, wobei die Anordnung zur Bereitstellung eines Behälters mit Werkstücken des Zuführmoduls (2) über eine Türe (13) von außen zugänglich ist, wobei bevorzugt die Anordnung zur Bereitstellung eines Behälters mit Werkstücken mindestens zwei Behälter (66) aufnehmen kann, und/oder wobei bevorzugt das Zuführmodul (2) eine Trennvorrichtung (14) aufweist, über welche ein Zuführbereich für einen oder mehrere Behälter von einem Arbeitsbereich trennbar ist, wobei insbesondere eine Haube (14) vorgesehen ist, welche so im Zuführmodul (2) angeordnet ist, dass diese wahlweise über den Zuführbereich für den einen oder den anderen Behälter angeordnet werden kann, um diesen abzudecken.

7. Vorrichtung nach einem der vorangegangenen Ansprüche, wobei die Anordnung zur Bereitstellung eines Behälters mit Werkstücken des Zuführmoduls (2) über eine automatische Behälterzu- und/oder abführstrecke (16, 17) mit Behältern versorgt wird, wobei bevorzugt die Anordnung zur Bereitstellung eines Behälters mit Werkstücken mindestens zwei Behälter aufnehmen kann, und/oder wobei das Zuführmodul (2) bevorzugt eine Transportanordnung (18) zum Transport der Behälter im inneren des Zuführmoduls aufweist, wobei die Transportanordnung (18) bevorzugt mit der automatischen Behälterzu- und/oder abführstrecke zusammenwirken kann oder mit dieser kombiniert ist, und/oder wobei eine Lichtschranke (20) vorgesehen ist, welche den Zuführbereich absichert.

8. Vorrichtung nach einem der vorangegangenen Ansprüche,
wobei die Anordnung zur Bereitstellung eines Behälters mit Werkstücken des Zuführmoduls ein Quershuttle (18) aufweist, welches mit einer Behälterzuführstrecke (16) und einer Behälterabführstrecke (17) mit jeweils gegenläufigen Transportrichtungen zusammenwirkt,
oder
wobei die Anordnung zur Bereitstellung eines Behälters mit Werkstücken des Zuführmoduls (2) einen Drehtisch (24) aufweist, auf welchem die Behälter anordenbar sind, wobei die Behälter durch Drehen des Drehtisches (24) von einem Zuführbereich des Zuführmoduls in einen Arbeitsbereich des Greifers des Handhabungsmoduls verfahrbar sind und umgekehrt, wobei der Drehtisch (24) bevorzugt Trennwände (25) aufweist, welche den Zuführbereich vom Arbeitsbereich trennen,
und/oder
wobei eine Transportstrecke (21) für Behälter durch das Zuführmodul hindurchführt.

9. Vorrichtung nach einem der vorangegangenen Ansprüche, wobei das Zuführmodul (2) neben der Bereitstellung der Behälter auch den Abtransport der Werkstücke übernimmt, wobei bevorzugt nur eine Transportstrecke (21) vorgesehen ist, auf welcher sowohl die Behälter zu- und abtransportiert werden und die vereinzelten und/oder positionierten Werkstücke abtransportiert werden, wobei auf der Transportstrecke bevorzugt die Behälter mit ungeordneten Werkstücken und Palettierkörbe zur Aufnahme der vereinzelten und/oder positionierten Werkstücke transportiert werden, wobei die Palettierkörbe bevorzugt Nester zur Aufnahme der Werkstücke aufweisen.

10. Vorrichtung nach einem der vorangegangenen Ansprüche,
mit einer Zwischenstation (27), wobei die Steuerung so ausgestaltet ist, dass der Greifer die Werkstücke nach dem Entnehmen aus dem Behälter auf der Zwischenstation (27) ablegt, wobei die Steuerung so ausgestaltet ist, dass die Werkstücke von einem Greifer von der Zwischenstation (27) aufgenommen und in einer Endablage abgelegt werden, wobei bevorzugt die Zwischenstation (27) in einem Handhabungsmodul (1) integriert ist und/oder die Zwischenstation (27) in einem Zwischenmodul angeordnet ist und/oder die Zwischenstation in dem Ausgabemodul angeordnet ist, und/oder
mit zwei Handhabungsmodulen (36, 37), wobei die Vorrichtung bevorzugt eine Zwischenstation (38) aufweist, wobei die Steuerung so ausgestaltet ist, dass der Greifer des ersten Handhabungsmoduls (36) die Werkstücke nach dem Entnehmen aus dem Behälter auf der Zwischenstation (38) ablegt, wobei die Steuerung so ausgestaltet ist, dass die Werkstücke von einem Greifer des zweiten Handhabungsmoduls (37) von der Zwischenstation aufgenommen und in einer Werkstückablage abgelegt werden, wobei die Zwischenstation bevorzugt in einem Zwischenmodul (38) angeordnet ist, welches zwischen den beiden Handhabungsmodulen angeordnet ist.

11. Vorrichtung nach einem der vorangegangenen Ansprüche, wobei das Ausgabemodul (3) eine Palettierzelle umfasst und/oder mit einer Palettierzelle zusammenwirken kann, wobei die Werkstücke insbesondere in Palettierkörbe einer Palettierzelle abgelegt werden und/oder
wobei das Ausgabemodul (3) mit einem Palettenhandlingsystem zusammenwirken kann, wobei in einer besonders bevorzugten Ausführungsform das Ausgabemodul dem Rüst- und/oder Zuführmodul des Palettenhandlingsystems entspricht

12. Vorrichtung nach einem der vorangegangenen Ansprüche, mit mehreren Handhabungsmodulen(1), welche mit dem Ausgabemodul (34), insbesondere einer Transportstrecke für den Abtransport der vereinzelten Werkstücke, zusammenwirken, wobei die Handhabungsmodule bevorzugt jeweils separate Zuführmodule (35) aufweisen.

13. Zuführmodul (2) für eine Vorrichtung nach einem der vorangegangenen Ansprüche, mit einer Anordnung zur Bereitstellung eines Behälters (66) mit Werkstücken, wobei das Zuführmodul Zellenwände (52 - 54), welche den Arbeitsbereich des Modules vor unbefugtem Zutritt schützen, und mechanische Verbindungspunkte zur Verbindung mit dem Handhabungsmodul (1) aufweist,
wobei die Anordnung zur Bereitstellung eines Behälters (66) mit Werkstücken des Zuführmoduls (2) von außen zugänglich ist, was das Einführen von vollen Behältern (66) in das Zuführmodul und die Entnahme von leeren Behältern aus dem Zuführmodul ermöglicht, und
wobei das Zuführmodul eine Objekterkennungseinrichtung (63) zum Erfassen der Werkstücke im Behälter aufweist.

14. Zuführmodul nach Anspruch 13, wobei eine Schnittstelle zu einem Handhabungsmodul vorgesehen ist, über welche die Daten der Objekterfassungseinrichtung (63) an eine Steuerung des Greifers übertragbar sind, und/oder über welche die Arbeit der Anordnung zur Bereitstellung eines Behälters (66) mit Werkstücken mit der Bewegung des Greifers koordinierbar ist.

15. Zuführmodul nach Anspruch 13 oder 14, wobei die Anordnung zur Bereitstellung eines Behälters (66) mit Werkstücken mindestens zwei Behälter aufnehmen kann, wobei bevorzugt das Zuführmodul eine Trennvorrichtung (14) aufweist, über welche ein Zuführbereich für einen oder mehrere Behälter von einem Arbeitsbereich trennbar ist, wobei insbesondere eine Haube (14) vorgesehen ist, welche so im Zuführmodul angeordnet ist, dass diese wahlweise über den Zuführbereich für den einen oder den anderen Behälter angeordnet werden kann, um diesen abzudecken,
und/oder wobei das Zuführmodul eine Schnittstelle für ein Fertigungssteuerungssystem aufweist, über welche der Betrieb des Zuführmoduls mit dem Betrieb eines Fertigungssystems koordinierbar ist.

## Claims

1. Apparatus for the automated removal of workpieces arranged in a container (66), having an object recognition device (63) for detecting the workpieces and at least one gripper for gripping and removing the workpiece from the container, and having a controller for evaluating the data of the object recognition device, for path planning and for controlling the gripper,
wherein the apparatus is set up in a modular manner from at least one handling module (1), at least one feed module (2), as well as an output module (3), wherein the handling module (1) comprises the gripper kinematics (10), in particular a robot or an area gantry, the feed module comprises an arrangement for providing a container (66) having workpieces, and the object recognition device (63), and the output module (3) comprises at least one workpiece placement area (15), on which the workpieces are placed down in a separated manner and/or in a defined position,
wherein the arrangement for providing a container (66) having workpieces of the feed module (2) is accessible from the outside, which makes possible the introduction of full containers (66) into the feed module and the removal of empty containers out of the feed module, and
wherein the output module (3), the handling module (1) and the feed module (2) each comprise cell walls (42, 43, 52 -54) which protect the working zone of the respective module against unauthorized entry, wherein the modules have mechanical connection points (48) for connecting to one another.

2. Apparatus in accordance with claim 1, wherein the output module has a transport path (15) for the workpieces, and/or
wherein a working space of the gripper of the handling module (1) extends beyond a base area of the handling module (1), so that workpieces can be gripped in the zone of the feed module, and/or
wherein the at least one handling module (1) is a robot module (1) with a robot (10), the working zone of which extends beyond a zone of the robot module (10), via at least one open side of the robot module (10), into an adjacent zone.

3. Apparatus in accordance with one of the preceding claims, having a machining and/or assembly module, wherein the machining and/or assembly module has a workpiece placement area, at which workpieces are placed down by a gripper of a handling module (1), and has a machining and/or assembly unit which machines and/or assembles the workpieces, wherein the machined and/or assembled workpieces are preferably gripped by a gripper of a handling module and are placed down onto the workpiece placement area of the output module (3).

4. Apparatus in accordance with one of the preceding claims, wherein one or more of the modules has/have cells frames (46) and/or a base plate (41), and/or wherein mechanical connection points (48) are arranged at the cell frames (46).

5. Apparatus in accordance with one of the preceding claims, wherein the individual modules have electrical interfaces, pneumatic interfaces and/or hydraulic interfaces (50) for connecting to one another, and/or wherein interfaces are provided which allow a coordination of the operation of the individual modules, and/or wherein an interface to a production control system is provided, which interface allows a coordination of the modules with a further production system.

6. Apparatus in accordance with one of the preceding claims, wherein the arrangement for providing a container having workpieces of the feed module (2) is accessible from the outside via a door (13), wherein the arrangement for providing a container having workpieces can preferably receive at least two containers (66), and/or wherein the feed module (2) preferably has a separating apparatus (14), via which a feed zone for one or more containers can be separated from a working zone, wherein a hood (14) is in particular provided, which is arranged in the feed module (2) such that it can selectively be arranged over the feed zone for the one or the other container in order to cover it.

7. Apparatus in accordance with one of the preceding claims, wherein the arrangement for providing a container having workpieces of the feed module (2) is supplied with containers via an automatic container feed path and/or removal path (16, 17), wherein the arrangement for providing a container having workpieces can preferably receive at least two containers, and/or wherein the feed module (2) preferably has a transport arrangement (18) for transporting the containers in the interior of the feed module, wherein the transport arrangement (18) can preferably cooperate with the automatic container feed path and/or removal path or is combined with it, and/or wherein a light barrier (20) is provided which secures the feed zone.

8. Apparatus in accordance with one of the preceding claims,
wherein the arrangement for providing a container having workpieces of the feed module has a transverse shuttle (18), which cooperates with a container feed path (16) and with a container removal path (17), each having opposite transport directions,
or
wherein the arrangement for providing a container having workpieces of the feed module (2) comprises a rotary table (24), on which the containers can be arranged, wherein the containers are travelable, by rotating the rotary table (24), from a feed zone of the feed module into a working zone of the gripper of the handling module and vice versa, wherein the rotary table preferably comprises separating walls (25) which separate the feed zone from the working zone,
and/or
wherein a transport path (21) for containers leads through the feed module.

9. Apparatus in accordance with one of the preceding claims, wherein the feed module (2) also takes over the transporting off of the workpieces, in addition to the providing of the containers, wherein preferably only one transport path (21) is provided, on which both the containers are transported in and away, and the separated and/or positioned workpieces are transported away, wherein the containers, having unordered workpieces and palletizing baskets for receiving the separated and/or positioned workpieces, are preferably transported on the transport path, wherein the palletizing baskets preferably have nests for receiving the workpieces.

10. Apparatus in accordance with one of the preceding claims,
having a buffer station (27), wherein the controller is configured such that the gripper places down the workpieces on the buffer station (27) after the removal from the container, wherein the controller is configured such that the workpieces are picked up from the buffer station (27) by a gripper, and are placed down in an end placement area, wherein the buffer station (27) is preferably integrated into a handling module (1), and/or the buffer station (27) is arranged in a buffer module, and/or the buffer station is arranged in the output module, and/or
having two handling modules (36, 37), wherein the apparatus preferably comprises a buffer station (38), wherein the controller is configured such that the gripper of the first handling module (36) places down the workpieces onto a buffer station (38) after the removal from the container, wherein the controller is configured such that the workpieces are picked up from the buffer station by a gripper of the second handling module (37) and are placed down in a workpiece placement area, wherein the buffer station is preferably arranged in a buffer module (38) which is arranged between the two handling modules.

11. Apparatus in accordance with one of the preceding claims, wherein the output module (3) comprises a palletizing cell and/or can cooperate with a palletizing cell, wherein the workpieces in particular are placed down in palletizing baskets of a palletizing cell, and/or
wherein the output module (3) can cooperate with a pallet handling system, wherein in a particularly preferred embodiment, the output module corresponds to the equipping- and/or feed module of the pallet handling system.

12. Apparatus in accordance with one of the preceding claims, having multiple handling modules (1), which cooperate with the output module (34), in particular with a transport path for the transporting away of the separated workpieces, wherein the handling modules preferably each have separate feed modules (35).

13. Feed module (2) for an apparatus in accordance with one of the preceding claims, having an arrangement for providing a container (66) with workpieces, wherein the feed module comprises cell walls (52 - 54) which protect the working zone of the module against unauthorized entry, and has mechanical connection points (48) for connecting to the handling module (1), wherein
the arrangement for providing a container (66) having workpieces of the feed module (2) is accessible from outside, which makes possible the introduction of full containers (66) into the feed module, and the removal of empty containers out of the feed module, and
wherein the feed module comprises an object recognition device (63) for detecting the workpieces in the container.

14. Feed module in accordance with claim 13, wherein an interface to a handling module is provided, via which the data of the object detection device (63) can be transferred to a controller of the gripper, and/or via which the work of the arrangement for providing a container (66) having workpieces can be coordinated with the movement of the gripper.

15. Feed module in accordance with claim 13 or 14, wherein the arrangement for providing a container (66) having workpieces can receive at least two containers (66), wherein the feed module preferably comprises a separating apparatus (14), via which a feed zone for one or more containers can be separated from a working zone, wherein a hood (14) is in particular provided, which is arranged in the feed module such that it can selectively be arranged over the feed zone for the one or the other container in order to cover it,
and/or wherein the feed module comprises an interface for a production control system, via which it is possible to coordinate the operation of the feed module with the operation of a production system.

## Revendications

1. Dispositif de prélèvement automatisé de pièces disposées dans un récipient (66), avec un système de reconnaissance d'objets (63) pour détecter les pièces et au moins un grappin pour saisir et prélever les pièces hors du récipient, et avec une commande d'évaluation des données du système de reconnaissance d'objets, de planification de trajet et de pilotage du grappin,
dans lequel le dispositif est élaboré de manière modulaire à partir d'au moins un module de manipulation (1), d'au moins un module d'amenée (2) ainsi que d'un module de distribution (3), dans lequel le module de manipulation (1) présente la cinématique de grappin (10), en particulier un robot ou un portique plat, le module d'amenée présente un ensemble pour fournir un récipient (66) avec des pièces et le système de reconnaissance d'objets (63),
et le module de distribution (3) présente au moins un réceptacle de pièces (15), sur lequel les pièces sont déposées de manière triée et/ou dans une position définie,
dans lequel
l'ensemble pour la fourniture d'un récipient (66) avec des pièces du module d'amenée (2) est accessible depuis l'extérieur, ce qui rend possible l'introduction de récipients (66) pleins dans le module d'amenée et le prélèvement de récipients vides hors du module d'amenée, et
dans lequel le module de distribution (3), le module de manipulation (1) et le module d'amenée (2) présentent respectivement des parois de cellule (42, 43, 52-54), lesquelles protègent contre tout accès non autorisé la zone de travail du module respectif, dans lequel les modules présentent des points de liaison (48) mécaniques destinés à être reliés les uns aux autres.

2. Dispositif selon la revendication 1, dans lequel le module de distribution présente une ligne de transport (15) pour les pièces, et/ou
dans lequel un espace de travail du grappin du module de manipulation (1) va au-delà d'une surface de base du module de manipulation (1) de sorte que des pièces sont saisies dans la zone du module d'amenée, et/ou
dans lequel au moins un module de manipulation (1) est un module robotisé (1) avec un robot (10) dont la zone de travail s'étend par au moins un côté ouvert du module robotisé (10) dans une zone adjacente au-delà d'une zone du module robotisé (10).

3. Dispositif selon l'une quelconque des revendications précédentes, avec un module d'usinage et/ou de montage, dans lequel le module d'usinage et/ou de montage présente un réceptacle de pièces, sur lequel des pièces sont déposées par un grappin d'un module de manipulation (1), et une unité d'usinage et/ou de montage, laquelle usine et/ou monte les pièces, dans lequel les pièces usinées et/ou montées sont saisies de manière préférée par un grappin d'un module de manipulation et sont déposées sur le réceptacle de pièces du module de distribution (3).

4. Dispositif selon l'une quelconque des revendications précédentes, dans lequel un ou plusieurs des modules présentent des châssis de cellule (46) et/ou une plaque de fond (41), et/ou dans lequel les points de liaison (48) mécaniques sont disposés sur les châssis de cellule (46).

5. Dispositif selon l'une quelconque des revendications précédentes, dans lequel les divers modules présentent des interfaces électriques, pneumatiques et/ou hydrauliques (50) destinées à être reliées entre elles, et/ou dans lequel sont prévues des interfaces, lesquelles permettent une coordination du fonctionnement des divers modules et/ou dans lequel est prévue une interface avec un système de commande de production, laquelle permet une coordination des modules avec un autre système de production.

6. Dispositif selon l'une quelconque des revendications précédentes, dans lequel l'ensemble pour la fourniture d'un récipient avec des pièces du module d'amenée (2) est accessible depuis l'extérieur par l'intermédiaire d'une porte (13), dans lequel de manière préférée l'ensemble de fourniture d'un récipient avec des pièces peut recevoir au moins deux récipients (66), et/ou dans lequel de manière préférée le module d'amenée (2) présente un dispositif de séparation (14), par l'intermédiaire duquel une zone d'amenée pour un ou plusieurs récipients peut être séparée d'une zone de travail, dans lequel en particulier est prévu un capot (14), lequel est disposé de telle sorte dans le module d'amenée (2) que celui-ci peut être disposé au choix au-dessus de la zone d'amenée pour le ou les autres récipients pour la recouvrir.

7. Dispositif selon l'une quelconque des revendications précédentes, dans lequel l'ensemble de fourniture d'un récipient avec des pièces du module d'amenée (2) est alimenté en récipients par l'intermédiaire d'une ligne d'amenée et/ou d'évacuation de récipients automatique (16, 17), dans lequel de manière préférée l'ensemble de fourniture d'un récipient avec des pièces peut recevoir au moins deux récipients, et/ou dans lequel le module d'amenée (2) présente de manière préférée un ensemble de transport (18) pour le transport des récipients à l'intérieur du module d'amenée, dans lequel l'ensemble de transport (18) peut coopérer de manière préférée avec la ligne d'amenée et/ou d'évacuation de récipients automatique ou est combiné à celle-ci, et/ou dans lequel une barrière photoélectrique (20) est prévue, laquelle isole la zone d'amenée.

8. Dispositif selon l'une quelconque des revendications précédentes,
dans lequel l'ensemble de fourniture d'un récipient avec des pièces du module d'amenée présente une navette transversale (18), laquelle coopère avec une ligne d'amenée de récipient (16) et une ligne d'évacuation de récipient (17) avec des directions de transport respectivement opposées,
ou
dans lequel l'ensemble de fourniture d'un récipient avec des pièces du module d'amenée (2) présente un plateau tournant (24), sur lequel les récipients peuvent être disposés, dans lequel les récipients peuvent être déplacés par rotation du plateau tournant (24) depuis une zone d'amenée du module d'amenée dans une zone de travail du grappin du module de manipulation et inversement, dans lequel le plateau tournant (24) présente de manière préférée des parois de séparation (25), lesquels séparent la zone d'amenée de la zone de travail,
et/ou
dans lequel une ligne de transport (21) pour des récipients traverse le module d'amenée.

9. Dispositif selon l'une quelconque des revendications précédentes, dans lequel le module d'amenée (2) assure également la sortie des pièces en plus de la fourniture des récipients, dans lequel de manière préférée seulement une ligne de transport (21) est prévue, sur laquelle les récipients sont à la fois entrés et sortis et les pièces triées et/ou positionnées sont sorties, dans lequel de manière préférée les récipients avec des pièces non agencées et des paniers de palettisation pour recevoir les pièces triées et/ou positionnées sont transportés sur la ligne de transport, dans lequel les paniers de palettisation présentent de manière préférée des nids pour recevoir les pièces.

10. Dispositif selon l'une quelconque des revendications précédentes,
avec un poste intermédiaire (27), dans lequel la commande est configurée de telle sorte que le grappin dépose les pièces après le prélèvement hors du récipient sur le poste intermédiaire (27), dans lequel la commande est configurée de telle sorte que les pièces sont réceptionnées par un grappin du poste intermédiaire (27) et sont déposées dans un dépôt final, dans lequel de manière préférée le poste intermédiaire (27) est intégré dans un module de manipulation (1) et/ou le poste intermédiaire (27) est disposé dans un module intermédiaire et/ou le poste intermédiaire est disposé dans le module de distribution, et/ou
avec deux modules de manipulation (36, 37), dans lequel le dispositif présente de manière préférée un poste intermédiaire (38), dans lequel la commande est configurée de telle sorte que le grappin du premier module de manipulation (36) dépose les pièces après le prélèvement hors du récipient sur le poste intermédiaire (38), dans lequel la commande est configurée de telle sorte que les pièces sont réceptionnées par un grappin du deuxième module de manipulation (37) du poste intermédiaire et sont déposées dans un dépôt de pièces, dans lequel le poste intermédiaire est disposé de manière préférée dans un module intermédiaire (38), lequel est disposé entre les deux modules de manipulation.

11. Dispositif selon l'une quelconque des revendications précédentes, dans lequel le module de distribution (3) comprend une cellule de palettisation et/ou peut coopérer avec une cellule de palettisation, dans lequel les pièces sont déposées en particulier dans des paniers de palettisation d'une cellule de palettisation, et/ou
dans lequel le module de distribution (3) peut coopérer avec un système de manutention de palettes, dans lequel dans un mode de réalisation particulièrement préféré, le module de distribution correspond au module d'équipement et/ou d'amenée du système de manutention de palettes.

12. Dispositif selon l'une quelconque des revendications précédentes, avec plusieurs modules de manipulation (1), lesquels coopèrent avec le module de distribution (34), en particulier une ligne de transport pour la sortie des pièces triées, dans lequel les modules de manipulation présentent de manière préférée des modules d'amenée (35) respectivement séparés.

13. Module d'amenée (2) pour un dispositif selon l'une quelconque des revendications précédentes, avec un ensemble de fourniture d'un récipient (66) avec des pièces, dans lequel le module d'amenée présente des parois de cellule (52 - 54), lesquelles protègent contre tout accès non autorisé la zone de travail du module, et des points de liaison mécaniques destinés à être reliés au module de manipulation (1),
dans lequel
l'ensemble de fourniture d'un récipient (66) avec des pièces du module d'amenée (2) est accessible depuis l'extérieur, ce qui permet l'introduction de récipients pleins (66) dans le module d'amenée et le prélèvement de récipients vides hors du module d'amenée, et
dans lequel le module d'amenée présente un système de reconnaissance d'objets (63) pour détecter les pièces dans le récipient.

14. Module d'amenée selon la revendication 13, dans lequel une interface avec un module de manipulation est prévue, par l'intermédiaire de laquelle les données du système de reconnaissance d'objets (63) peuvent être transmises à une commande du grappin, et/ou par l'intermédiaire de laquelle le fonctionnement de l'ensemble de fourniture d'un récipient (66) avec des pièces peut être coordonné avec le déplacement du grappin.

15. Module d'amenée selon la revendication 13 ou 14, dans lequel l'ensemble de fourniture d'un récipient (66) avec des pièces peut recevoir au moins deux récipients, dans lequel de manière préférée le module d'amenée présente un dispositif de séparation (14), par l'intermédiaire duquel une zone d'amenée pour un ou plusieurs récipients peut être séparée d'une zone de travail, dans lequel en particulier est prévu un capot (14), lequel est disposé de telle sorte dans le module d'amenée que celui-ci peut être disposé au choix au-dessus de la zone d'amenée pour le ou les autres récipients pour la recouvrir
et/ou dans lequel le module d'amenée présente une interface pour un système de commande de production, par l'intermédiaire de laquelle le fonctionnement du module d'amenée peut être coordonné avec le fonctionnement d'un système de production.
